(19) Europäisches Patentamt
European Patent Office
Office européen des brevets

(11) EP 3 608 347 A1

(12) # EUROPÄISCHE PATENTANMELDUNG

(43) Veröffentlichungstag:
**12.02.2020 Patentblatt 2020/07**

(21) Anmeldenummer: **18187907.3**

(22) Anmeldetag: **08.08.2018**

(51) Int Cl.:
***C08G 18/40*** *(2006.01)* ***C08G 18/76*** *(2006.01)*
***C08K 5/00*** *(2006.01)* ***C08G 18/18*** *(2006.01)*
***C08G 101/00*** *(2006.01)*

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Covestro Deutschland AG**
**51373 Leverkusen (DE)**

(72) Erfinder: **Die Erfindernennung liegt noch nicht vor**

(74) Vertreter: **Levpat**
**c/o Covestro AG**
**Gebäude 4825**
**51365 Leverkusen (DE)**

(54) **WEICHSCHAUMSTOFF MIT HALOGENFREIEM FLAMMSCHUTZ**

(57) Die vorliegende Erfindung betrifft ein Verfahren zur Herstellung von Polyurethan-Weichschaum, wobei der Polyurethan-Weichschaum erhalten wird oder erhältlich ist durch Umsetzung einer Zusammensetzung enthaltend oder bestehend aus

- einer Komponente **A1** enthaltend oder bestehend aus Verbindungen die gegenüber Isocyanaten reaktiv sind, wobei die Komponente **A1** zu mindestens 30 Gew.-%, bezogen auf die Komponente **A1**, aus Verbindungen mit einer OH-Zahl nach DIN 53240-1 (Juni 2013) von 25-57 mg KOH/g besteht;
- einer Komponente **A2** enthaltend Wasser und/oder mindestens ein physikalisches Treibmittel;
- gegebenenfalls einer Komponente **A3** enthaltend Hilfs- und Zusatzstoffe;
- einer Komponente **A4** enthaltend oder bestehend aus mindestens einem Flammschutzmittel;
- einer **Komponente B** enthaltend oder bestehend aus Di- und/oder Polyisocyanaten;

bei einer Kennzahl in einem Bereich von 60 bis 115,
**dadurch gekennzeichnet, dass**
das Komponente **A4** mindestens ein Phosphinat-Salz mit der Formel (I) enthält oder daraus besteht:

$$M^{m+} (R^1R^2PO_2)^-_m \qquad (I)$$

wobei,
M ein Kation ist,
m eine ganze Zahl ≥ 1 ist und
$R^1$ und $R^2$ unabhängig voneinander ausgewählt sind aus der Gruppe bestehend aus H, $C_1$-$C_4$ Alkylgruppen und $C_6$-$C_{12}$ Arylgruppen.

EP 3 608 347 A1

**Beschreibung**

Die vorliegende Erfindung betrifft ein Verfahren zur Herstellung flammgeschützter Polyurethan-Weichschäume enthaltend Phosphinate, sowie durch das Verfahren hergestellte flammgeschützte PUR-Weichschäume enthaltend Phosphinate und die Verwendung von Phosphinaten als Flammschutzmittel zur Herstellung von PUR-Weichschäumen.

Unter Polyurethan-Weichschäumen werden Polyurethan-Schäume verstanden, die einer Druckbeanspruchung einen geringen Widerstand entgegensetzen, die offenzellig, luftdurchlässig und reversibel verformbar sind. Ein typisches Merkmal von Polyurethan-Weichschäumen ist ihre Härte, insbesondere die Stauchhärte. Die Härte ist das Maß für den Widerstand, den das Material einer Verformung entgegensetzt (G.W. Becker, D. Braun: Polyurethane. In: G. Oertel (Ed.), Kunststoff Handbuch, München, Carl Hanser Verlag, 1993, 3. A., Kap. 5, S. 193 f., s. 220 f.). Polyurethan-Weichschäume können unter anderem hergestellt werden, indem die Reaktionsmischung in einer Form polymerisiert wird, man spricht dann von Formschäumen. Dabei kann die Reaktionsmischung entweder mit oder ohne äußere Wärmezufuhr aushärten, abhängig von dem Verfahren spricht man von Kaltschaum oder Heißschaum.

So wie alle organischen Polymere sind auch PUR-Weichschaumstoffe brennbar, wobei die große Oberfläche pro Masseneinheit in Schaumstoffen dieses Verhalten noch verstärkt. PUR-Weichschaumstoffe werden beispielsweise in der Möbelindustrie als Sitzpolster oder allgemein als Lärm- und Wärmedämmmaterialen eingesetzt. In vielen Einsatzgebieten von PUR-Weichschaumstoffen ist daher eine Brandschutzausrüstung durch zugesetzte Flammschutzmittel erforderlich. Als Flammschutzmittel werden üblicherweise Halogen- und Phosphorverbindungen verwendet.

An Flammschutzmittel werden vielseitige Anforderungen gestellt: Sie sollen mit den Zusammensetzungen für die Herstellung des Polyurethan-Schaums gut mischbar sein und den Herstellungsprozess, insbesondere das Aufschäumverhalten nicht negativ beeinflussen. Flammschutzmittel sollen aus dem erhaltenen Polyurethan-Schaum nicht in Form von Dämpfen auswandern. Außerdem sollen sie die mechanischen Eigenschaften des erhaltenen Polyurethan-Schaums nicht beeinflussen. Im Brandfall sollen sie wenig Rauch und keine toxischen Gase entwickeln (G.W. Becker, D. Braun: Polyurethane. In: G. Oertel (Ed.), Kunststoff Handbuch, München, Carl Hanser Verlag, 1993, 3. A., Kap. 3.4.6, S. 118 f.).

Die bisher aus dem Stand der Technik bekannten Flammschutzmittel für die Verwendung in Polyurethan-Weichschaumstoffen werden diesen Anforderungen nicht vollumfänglich gerecht. Herkömmliche Flammschutzmittel migrieren aus dem Polyurethan-Schaum und/oder bilden teilweise im Verbrennungsprozess gesundheitsschädliche Substanzen. Darüber hinaus wird die Schaumbildung bei der Herstellung von Polyurethan-Schäumen von einigen bekannten Flammschutzmitteln erschwert oder je nach eingesetzter Menge teilweise sogar unterbunden. Der erhaltene Polyurethan-Schaum weist dann nicht die gewünschten mechanischen Eigenschaften, insbesondere nicht die gewünschte Stauchhärte auf und unter Umständen wird gar kein Schaum erhalten. Daher kann von einigen herkömmlichen Flammschutzmitteln nur eine geringe Menge bei der Herstellung von PUR-Weichschäumen eingesetzt werden, was den Umfang des erreichten Flammschutzes reduziert.

Halogenhaltige Flammschutzmittel wie Tris(chlorethyl)phosphat ("TCEP") und Tris(dichlorpropyl)phosphat ("TDCP") sind gesundheitsschädlich und relativ flüchtig und können so aus dem Schaum migrieren (J.C. Quagliano, V.M. Wittemberg, I.C.G. Garcia: Recent Advances on the Utilization of Nanoclays and Organophosphorus Compounds in Polyurethane Foams for Increasing Flame Retardancy. In: J. Njuguna (Ed.), Structural Nanocomposites, Engineering Materials, Berlin Heidelberg, Springer Verlag, 2013, 1, 249-258). Tris(chlorpropyl)phosphat (TCPP) bildet im Verbrennungsprozess korrosive Salzsäure. Zudem ist TCPP flüchtig und beeinflusst die mechanischen Eigenschaften des erhaltenen Polyurethan-Schaums, weil es als Weichmacher wirkt.

Die aus dem Stand der Technik bekannten halogenfreien Alternativen weisen auch Nachteile auf. Beispielsweise absorbiert roter Phosphor Feuchtigkeit und oxidiert, was zu einem Verlust des Flammschutzes und ggf. zur Bildung giftiger Phosphine führt. Außerdem neigt roter Phosphor zu Pulverexplosionen. Oft wird roter Phosphor unter hohem Kostenaufwand mikroverkapselt, um diese Probleme zu beseitigen. (L. Chen, Y.-Z. Wang: A review on flame retardant technology in China. Part 1: development of flame retardants, Polym. Adv. Technol., 2010, 21, 1-26).

Im Stand der Technik wird auch auf halogenfreie Phosphatester und Phosphitester als Flammschutzmittel verwiesen (S.V. Levchik in Non-Halogenated Flame Retardant Handbook chapter 2, ed. A. B. Morgan, C. A. Wilkie, 2014, Scrivener Publishing LLC, pages 17-74) Triethylphosphat oder Phosphonate wie Diethyl-Ethylphosphonat (DEEP) oder Dimethyl-Propylphosphonat (DMPP) sind jedoch flüchtig. Arylphosphate wie Triphenylphosphat (TPP) oder Diphenylkresylphosphat (DPK) sind sehr empfindlich gegen Hydrolyse zu giftigem Phenol bzw. Kresol und sind daher wassergefährdend.

Es werden auch oligomere organische Phosphate (z.B. Exolit® OP550, Fyrol® PNX) oder oligomere organische Phosphonate (z.B. Exolit® OP560) verwendet. Die oligomeren Phosphate oder Phosponate können jedoch auch empfindlich gegen Hydrolyse sein. Eine alkylierende Wirkung bei hohen Temperaturen in Schaumstoffen des oligomeren organischen Phosphats, das unter dem Markennamen Fyrol® PNX bekannt ist, kann ebenfalls nicht ausgeschlossen werden. Oligomere organische Phosphate und Phosphonate wie Exolit® OP550 und wie Exolit® OP560 können bei der Herstellung eines PUR-Weichschaumstoffs stark zellöffnend wirken, so dass ihre Verwendung schon in Mengen, die

für andere Flammschutzmittel üblich sind, dazu führt, dass PUR-Weichschaumstoffe kollabieren, d.h. nicht aufschäumen. PUR-Weichschaumstoffe, welche die oben genannten oligomeren Phosphatverbindungen enthalten, sacken häufig kurz nachdem sie aufgeschäumt waren wieder ab.

Ammoniumpolyphosphat blockiert Aminkatalysatoren beim Umsalzen. Die Ammoniumionen, die beim Umsalzen freiwerden können, können als Kettenabbrecher wirken. Die Verwendung von Diphosphinen, ihrer Oxide und Sulfide als Flammschutzmittel in Polyurethanen offenbart WO 2011/092232.

Das gebräuchlichste Flammschutzmittel für Weichschaumstoffe ist Melamin. Dieses Flammschutzmittel wirkt auf Polyurethan-Weichschäume jedoch verhärtend, d.h. die Schäume weisen eine höhere Härte auf als gewünscht. Außerdem wird Melamin neuerdings von der Europäischen Chemikalienagentur als bedenklich untersucht.

Der Einsatz von Phosphinatsalzen als Flammschutzmittel ist bisher nur in thermoplastischen oder duroplastischen Werkstoffen oder in intumeszent aufschäumbaren Lacken und Epoxidharzen als Flammschutzmittel beschrieben.

DE10 2004 035 508 A1 bezieht sich auf den Einsatz nanoteiliger Phosphinatsalze in flammgeschützten Polymerformmassen. Die Druckschrift lehrt, dass sich durch die Verwendung von nanoteiligen Flammschutzmitteln Polymerformkörper mit deutlich verbesserten mechanischen Elastizitätswerten herstellen lassen. Die Druckschrift bezieht sich auf Polyurethan Elastomere nur als Verstärkungsmaterialen für flammgeschützte Polymerformkörper und bezieht sich darüber hinaus nur auf duroplastische Polyurethane. In den Beispielen wird Aluminiumdiethylphosphinat mit Alkylsiloxan gemischt und getrocknet. Das so erhaltene nanoteilige Phosphinatsalz wird in den Beispielen dieser Druckschrift in Formmassen auf Basis von Polyacrylnitril, Polystyrol und Acrylat verwendet. Diese Druckschrift offenbart bezieht sich nur auf die feuerverhindernden Eigenschaften der nanoteiligen Phosphinatsalze.

Eine Untersuchung der flammschützenden Eigenschaften von Phosphor verschiedener Oxidationsstufen, unter anderem auch Aluminiumphosphinat, in Polyurethan-Hartschäumen offenbaren A. Lorenzetti et al. (Polymer Degradation and Stability, 96 (2011), S. 1455-1461; doi:10.1016/j.polymerdegradstab. 2011.05.012).

WO 2005/118604 offenbart Flammschutzmittel auf Basis von phosphorhaltigen Polyethern die durch Umsetzung einer phosphorhaltigen Komponente (A), welche eine H-P=O, eine P-H und/oder eine P-OH Gruppe hat, mit einem Polyether (B). Der Polyether (B) kann verschieden Substituenten haben, wobei auch eine Phosphinat-Gruppe als Substituent ausgewählt werden kann. Des Weiteren wird die Verwendung dieser phosphorhaltigen Flammschutzmittel in feuerbeständigen, weichen Polyurethan-Schäumen beschrieben. Diese Druckschrift offenbart keine Phosphinatsalze und bezieht sich nur auf die feuerverhindernden Eigenschaften der phosphorhaltigen Polyether.

Die Aufgabe der vorliegenden Erfindung ist es, ein Verfahren zur Herstellung von flammgeschütztem PUR-Weichschaum zur Verfügung zu stellen, wobei der erhaltene PUR-Weichschaum im Vergleich zu herkömmlichen flammgeschützten PUR-Weichschaumstoffen verbesserte Brandschutzeigenschaften, insbesondere eine kürzere Brenndauer aufweist. Gleichzeitig soll der erhaltene PUR-Weichschaum gute mechanische Eigenschaften aufweisen, wobei insbesondere die aus dem Stand der Technik bekannten Änderungen der mechanischen Eigenschaften durch Flammschutzmittel, z.B. die weichmachenden Eigenschaften des TCPP oder die verhärtende Wirkung des Melamins, vermieden werden sollen. Des Weiteren soll durch die Verwendung eines Flammschutzmittels das Aufschäumverhalten der PUR-Weichschäume, insbesondere bei Formschaumverfahren, nicht beeinflusst werden.

Diese Aufgabe konnte gelöst werden durch ein Verfahren zur Herstellung von Polyurethan-Weichschaum, wobei der Polyurethan-Weichschaum erhalten wird oder erhältlich ist durch Umsetzung einer Zusammensetzung enthaltend oder bestehend aus

- einer Komponente **A1** enthaltend oder bestehend aus Verbindungen die gegenüber Isocyanaten reaktiv sind, wobei die Komponente **A1** zu mindestens 30 Gew.-%, bezogen auf die Komponente **A1**, aus Verbindungen mit einer OH-Zahl nach DIN 53240-1 (Juni 2013) von 25-57 mg KOH/g besteht;
- einer Komponente **A2** enthaltend Wasser und/oder mindestens ein physikalisches Treibmittel;
- gegebenenfalls einer Komponente **A3** enthaltend Hilfs- und Zusatzstoffe;
- einer Komponente **A4** enthaltend oder bestehend aus mindestens einem Flammschutzmittel;
- einer Komponente **B** enthaltend oder bestehend aus Di- und/oder Polyisocyanaten;
  bei einer Kennzahl in einem Bereich von 60 bis 115,
  dadurch gekennzeichnet, dass
  das Komponente **A4** mindestens ein Phosphinat-Salz mit der Formel (I) enthält oder daraus besteht:

$$M^{m+}(R^1R^2PO_2)^-_m \qquad (I)$$

wobei,

M ein Kation ist,
m eine ganze Zahl $\geq$ 1 ist und
$R^1$ und $R^2$ unabhängig voneinander ausgewählt sind aus der Gruppe bestehend aus H, $C_1$-$C_4$ Alkylgruppen

und $C_6$-$C_{12}$ Arylgruppen.

Überraschenderweise wurde gefunden, dass nicht nur die Brandschutzeigenschaften von PUR-Weichschaum enthaltend Phosphinatsalze als Flammschutzmittelkomponente, sondern auch das Aufschäumverhalten der PUR-Weichschaumstoffe verbessert wird. Darüber hinaus weist der erhaltene PUR-Weichschaum die gewünschten mechanischen Eigenschaften auf, d.h. die Stauchhärte und die Rohdichte werden durch die Verwendung eines Phosphinatsalzes nicht verschlechtert.
Die PUR-Weichschaumstoffe können als Form- oder auch als Blockschaumstoffe hergestellt werden. Vorzugsweise ist das erfindungsgemäße Verfahren ein Formschaumverfahren.
Die Verfahren zur Herstellung von PUR-Weichschaumstoffen sind an sich bekannt und werden z.B. im Kunststoff-Handbuch, Band VII, herausgegeben von Vieweg und Höchtlen, Carl-Hanser-Verlag, München 1993, auf den Seiten 139-265, beschrieben. PUR-Weichschaumstoffe können im Heiß- oder Kaltschaumverhalten hergestellt werden, bevorzugt ist das Kaltschaumverfahren.
Bevorzugt enthält die Zusammensetzung keine Derivate des Melamins, keine Derivate der Cyanursäure und/oder keine Derivate der Borsäure enthält.
Das erfindungsgemäße Verfahren wird bei einer Kennzahl von 60 bis 115 durchgeführt, bevorzugt von 70 bis 90, besonders bevorzugt von 80 bis 90.

Komponente **A1**

Als Isocyanat-reaktive Komponente **A1** wird mindestens ein Polyol eingesetzt, das ausgewählt ist aus der Gruppe bestehend aus Polyetherpolyolen, Polyesterpolyolen, Polyetheresterpolyolen, Polycarbonatpolyolen und Polyether-Polycarbonatpolyolen. Bevorzugt sind Polyesterpolyole und/oder Polyetherpolyole. Die Komponente A1 besteht zu mindestens 30 Gew.-%, bezogen auf die Komponente **A1**, aus Verbindungen mit einer OH-Zahl nach DIN 53240-1 (Juni 2013) von 25-57 mg KOH/g, bevorzugt von 25 bis 50 mg KOH/g, insbesondere 25 bis 30 mg KOH/g und besonders bevorzugt von 26 bis 29 mg KOH/g. Bevorzugt besteht Komponente A1 zu mindestens 50 Gew.-%, bevorzugter mindestens 70 Gew.-% und besonders bevorzugt zu mindestens 85 Gew.-% aus aus Verbindungen mit einer OH-Zahl nach DIN 53240-1 (Juni 2013) von 25-57 mg KOH/g. In einer weiteren bevorzugten Ausführungsform besteht Komponente A1 aus Verbindungen mit einer OH-Zahl nach DIN 53240-1 (Juni 2013) von 25-57 mg KOH/g, bevorzugter von 25 bis 50 mg KOH/g, insbesondere 25 bis 30 mg KOH/g und besonders bevorzugt von 26 bis 29 mg KOH/g.
Die OH-Zahl (auch: Hydroxylzahl) gibt im Falle eines einzelnen zugesetzten Polyols dessen OH-Zahl an. Angaben der OH-Zahl für Mischungen beziehen sich auf die zahlenmittlere OH-Zahl der Mischung, berechnet aus den OH-Zahlen der einzelnen Komponenten in ihren jeweiligen molaren Anteilen. Die OH-Zahl gibt die Menge an Kaliumhydroxid in Milligramm an, welche der bei einer Acetylierung von einem Gramm Substanz gebundenen Menge Essigsäure gleichwertig ist. Sie wird im Rahmen der vorliegenden Erfindung bestimmt nach der Norm DIN 53240-1 (Juni 2013).
Vorzugsweise kann die einzelne Polyolkomponente ein zahlenmittleres Molekulargewicht nach DIN 55672-1 vom August 2007 von $\geq$ 300 g/mol bis $\leq$ 6000 g/mol, insbesondere $\geq$ 2000 g/mol bis $\leq$ 5000 g/mol, bevorzugter $\geq$ 3000 g/mol bis $\leq$ 5000, besonders bevorzugt von 4500 g/mol bis 5000 g/mol aufweisen.
Die zahlenmittlere Molmasse $M_n$ (auch: Molekulargewicht) wird im Rahmen dieser Erfindung bestimmt durch Gelpermeationschromatographie nach DIN 55672-1 vom August 2007.
Die Polyesterpolyole der Komponente **A1** können beispielsweise Polykondensate aus mehrwertigen Alkoholen, vorzugsweise Diolen, mit 2 bis 12 Kohlenstoffatomen, vorzugsweise 2 bis 6 Kohlenstoffatomen, und Di-, Tri- oder sogar Tetracarbonsäuren oder Hydroxycarbonsäuren oder Lactonen sein, bevorzugt werden aromatische Dicarbonsäuren oder Gemische aus aromatischen und aliphatischen Dicarbonsäuren. Anstelle der freien Polycarbonsäuren können auch die entsprechenden Polycarbonsäureanhydride oder entsprechende Polycarbonsäureester von niederen Alkoholen zur Herstellung der Polyester verwendet werden. Bevorzugt verwendet werden Phthalsäureanhydrid, Terephthalsäure und/oder Isophthalsäure.
Als Carbonsäuren kommen insbesondere in Betracht: Bernsteinsäure, Glutarsäure, Adipinsäure, Korksäure, Azelainsäure, Sebazinsäure, Decandicarbonsäure, Tetrahydrophthalsäure, Hexahydrophthalsäure, Cyclohexandicarbonsäure, Tetrachlorphthalsäure, Itaconsäure, Malonsäure, 2-Methylbernsteinsäure, 3,3-Diethylglutarsäure, 2,2-Dimethylbernsteinsäure, Dodekandisäure, Endomethylentetrahydrophthalsäure, Dimerfettsäure, Trimerfettsäure, Zitronensäure, Trimellithsäure, Benzoesäure Maleinsäure, Fumarsäure, Phthalsäure, Isophthalsäure und Terephthalsäure. Verwendet werden können ebenso Derivate dieser Carbonsäuren, wie beispielsweise Dimethylterephthalat. Die Carbonsäuren können dabei sowohl einzeln als auch im Gemisch verwendet werden. Als Carbonsäuren werden bevorzugt Adipinsäure, Sebacinsäure und/oder Bernsteinsäure, besonders bevorzugt Adipinsäure und/oder Bernsteinsäure, verwendet.
Hydroxycarbonsäuren, die als Reaktionsteilnehmer bei der Herstellung eines Polyesterpolyols mit endständigen Hydroxylgruppen mitverwendet werden können, sind beispielsweise Hydroxycapronsäure, Hydroxybuttersäure, Hydroxydecansäure, Hydroxystearinsäure und dergleichen. Geeignete Lactone sind unter anderem Caprolacton, Butyrolacton und deren Homologe.

Zur Herstellung der Polyesterpolyole kommen insbesondere auch biobasierte Ausgangsstoffe und/oder deren Derivate in Frage, wie z. B. Rizinusöl, Polyhydroxyfettsäuren, Ricinolsäure, Hydroxyl-modifizierten Öle, Weintraubenkernöl, schwarzem Kümmelöl, Kürbiskernöl, Borretschsamenöl, Sojabohnenöl, Weizensamenöl, Rapsöl, Sonnenblumenkernöl, Erdnussöl, Aprikosenkernöl, Pistazienöl, Mandelöl, Olivenöl, Macadamianussöl, Avocadoöl, Sanddornöl, Sesamöl, Hanföl, Haselnussöl, Primelöl, Wildrosenöl, Distelöl, Walnussöl, Fettsäuren, hydroxylmodifizierte und epoxidierte Fettsäuren und Fettsäureester, beispielsweise basierend auf Myristoleinsäure, Palmitoleinsäure, Ölsäure, Vaccensäure, Petroselinsäure, Gadoleinsäure, Erukasäure, Nervonsäure, Linolsäure, alpha- und gamma-Linolensäure, Stearidonsäure, Arachidonsäure, Timnodonsäure, Clupanodonsäure und Cervonsäure. Insbesondere bevorzugt sind Ester der Rizinolsäure mit mehrfunktionellen Alkoholen, z.B. Glycerin. Bevorzugt ist auch die Verwendung von Mischungen solcher biobasierten Säuren mit anderen Carbonsäuren, z.B. Phthalsäuren.

Beispiele für geeignete Diole sind Ethylenglykol, Butylenglykol, Diethylenglykol, Triethylenglykol, Polyalkylenglykole wie Polyethylenglykol, weiterhin 1,2-Propandiol, 1,3-Propandiol, 1,3-Butandiol, 1,4-Butandiol, 1,6-Hexandiol und Isomere, Neopentylglykol oder Hydroxypivalinsäureneopentylglykolester. Vorzugsweise verwendet werden Ethylenglykol, Diethylenglykol, 1,4-Butandiol, 1,5-Pentandiol, 1,6-Hexandiol oder Mischungen aus mindestens zwei der genannten Diole, insbesondere Mischungen aus 1,4-Butandiol, 1,5-Pentandiol und 1,6-Hexandiol.

Daneben können auch Polyole wie Trimethylolpropan, Glycerin, Erythrit, Pentaerythrit, Trimethylolbenzol oder Trishydroxyethylisocyanurat eingesetzt werden, wobei Glycerin und Trimethylolpropan bevorzugt sind.

Es können zusätzlich auch einwertige Alkanole mit verwendet werden.

Erfindungsgemäß eingesetzte Polyetherpolyole werden nach dem Fachmann bekannten Herstellungsmethoden erhalten, wie beispielsweise durch anionische Polymerisation von einem oder mehreren Alkylenoxiden mit 2 bis 4 Kohlenstoffatomen mit Alkalihydroxiden, wie Natrium- oder Kaliumhydroxid, Alkalialkoholaten, wie Natriummethylat, Natrium- oder Kaliumethylat oder Kaliumisopropylat, oder aminischen Alkoxylierungs-Katalysatoren, wie Dimethylethanolamin (DMEOA, Imidazol und/oder Imidazolderivaten, unter Verwendung mindestens eines Startermoleküls, das 2 bis 8, vorzugsweise 2 bis 6 reaktive Wasserstoffatome gebunden enthält.

Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Bevorzugte Alkylenoxide sind Propylenoxid und Ethylenoxid, besonders bevorzugt ist Ethylenoxid.

Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamine, 2,3-, 2,4- und 2,6-Toluylendiamin und 2,2'-, 2,4'- und 4,4'-Diaminodiphenylmethan.

Vorzugsweise verwendet werden zwei oder mehrwertige Alkohole, wie Ethandiol, 1,2- und 1,3-Propandiol, Diethylenglykol, Dipropylenglykol, 1,4-Butandiol, 1,6-Hexandiol, Triethanolamin, Bisphenole, Glycerin, Trimethylolpropan, Pentaerythrit, Sorbit und Saccharose.

Verwendbare Polycarbonatpolyole sind Hydroxylgruppen aufweisende Polycarbonate, zum Beispiel Polycarbonatdiole. Diese entstehen in der Reaktion von Kohlensäurederivaten, wie Diphenylcarbonat, Dimethylcarbonat oder Phosgen, mit Polyolen, bevorzugt Diolen.

Beispiele derartiger Diole sind Ethylenglykol, 1,2- und 1,3-Propandiol, 1,3- und 1 ,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethylpentandiol-1,3, Dipropylenglykol, Polypropylenglykole, Dibutylenglykol, Polybutylenglykole, Bisphenole und lactonmodifizierte Diole der vorstehend genannten Art.

Statt oder zusätzlich zu reinen Polycarbonatdiolen können auch Polyether-Polycarbonatdiole eingesetzt werden, welche beispielsweise durch Copolymerisation von Alkylenoxiden, wie zum Beispiel Propylenoxid, mit $CO_2$ erhältlich sind.

Verwendbare Polyetheresterpolyole sind solche Verbindungen, die Ethergruppen, Estergruppen und OH-Gruppen enthalten. Organische Dicarbonsäuren mit bis zu 12 Kohlenstoffatomen sind zur Herstellung der Polyetheresterpolyole geeignet, vorzugsweise aliphatische Dicarbonsäuren mit $\geq 4$ bis $\leq 6$ Kohlenstoffatomen oder aromatische Dicarbonsäuren, die einzeln oder im Gemisch verwendet werden. Beispielhaft seien Korksäure, Azelainsäure, Decandicarbonsäure, Maleinsäure, Malonsäure, Phthalsäure, Pimelinsäure und Sebacinsäure sowie insbesondere Glutarsäure, Fumarsäure, Bernsteinsäure, Adipinsäure, Phthalsäure, Terephthalsäure und Isoterephthalsäure genannt. Neben organischen Dicarbonsäuren können auch Derivate dieser Säuren, beispielsweise deren Anhydride sowie deren Ester und Halbester mit niedermolekularen, monofunktionellen Alkoholen mit $\geq 1$ bis $\leq 4$ Kohlenstoffatomen eingesetzt werden. Der anteilige Einsatz der oben genannten biobasierten Ausgangsstoffe, insbesondere von Fettsäuren bzw. Fettsäurederivaten (Ölsäure, Sojaöl etc.) ist ebenfalls möglich und kann Vorteile aufweisen, z.B. im Hinblick auf Lagerstabilität der Polyolformulierung, Dimensionsstabilität, Brandverhalten und Druckfestigkeit der Schäume.

Als weitere Komponente zur Herstellung der Polyetheresterpolyole werden Polyetherpolyole eingesetzt, die man durch Alkoxylieren von Startermolekülen wie mehrwertigen Alkoholen erhält. Die Startermoleküle sind mindestens difunktionell, können aber gegebenenfalls auch Anteile höherfunktioneller, insbesondere trifunktioneller, Startermoleküle enthalten.

Startermoleküle sind zum Beispiel Diole wie 1,2-Ethandiol, 1,3-Propandiol, 1,2-Propandiol, 1,4-Butandiol, 1,5-Pentendiol, 1,5-Pentandiol, Neopentylglykol, 1,6-Hexandiol, 1,7-Heptandiol, 1,8-Octandiol, 1,10-Decandiol, 2-Methyl-1,3-propandiol, 2,2-Dimethyl-1,3-propandiol, 3-Methyl-1,5-pentandiol, 2-Butyl-2-ethyl-1,3-propandiol, 2-Buten-1,4-diol und 2-Butin-1,4-diol, Etherdiole wie Diethylenglykol, Triethylenglykol, Tetraethylenglykol, Dibutylenglykol, Tributylenglykol, Tetrabutylenglykol, Dihexylenglykol, Trihexylenglykol, Tetrahexylenglykol und Oligomerengemische von Alkylenglykolen, wie Diethylenglykol. Auch Startermoleküle mit von OH verschiedenen Funktionalitäten können alleine oder in Mischung eingesetzt werden.

"Funktionalität" bezeichnet im Rahmen der vorliegenden Erfindung die theoretische, aus den bekannten Einsatzstoffen und deren Mengenverhältnissen berechnete mittlere Funktionalität (Anzahl an gegenüber Isocyanaten bzw. gegenüber Polyolen reaktiven Funktionen im Molekül).

Neben den Diolen können als Startermoleküle für die Herstellung der Polyether auch Verbindungen mit > 2 Zerewitinoff-aktiven Wasserstoffen, besonders mit zahlenmittleren Funktionalitäten von > 2 bis ≤ 8, insbesondere von ≥ 3 bis ≤ 6 mitverwendet werden, zum Beispiel 1,1,1-Trimethylolpropan, Triethanolamin, Glycerin, Sorbitan und Pentaerythrit sowie auf Triolen oder Tetraolen gestartete Polyethylenoxidpolyole.

Polyetheresterpolyole können auch durch die Alkoxylierung, insbesondere durch Ethoxylierung und/oder Propoxylierung, von Reaktionsprodukten, die durch die Umsetzung von organischen Dicarbonsäuren und deren Derivaten sowie Komponenten mit Zerewitinoff-aktiven Wasserstoffen, insbesondere Diolen und Polyolen, erhalten werden, hergestellt werden. Als Derivate dieser Säuren können beispielsweise deren Anhydride eingesetzt werden, wie zum Beispiel Phthalsäureanhydrid.

Herstellungsverfahren der Polyole sind beispielsweise von Ionescu in "Chemistry and Technology of Polyols for Polyurethanes", Rapra Technology Limited, Shawbury 2005, S.55 ff. (Kap. 4: Oligo-Polyols for Elastic Polyurethanes), S. 263 ff. (Kap. 8: Polyester Polyols for Elastic Polyurethanes) und insbesondere auf S.321 ff. (Kap. 13: Polyether Polyols for Rigid Polyurethane Foams) und S.419 ff. (Kap. 16: Polyester Polyols for Rigid Polyurethane Foams) beschrieben worden. Es ist auch möglich, Polyester- und Polyetherpolyole über Glykolyse von geeigneten Polymer-Rezyklaten zu gewinnen. Geeignete Polyether-Polycarbonatpolyole und ihre Herstellung werden beispielsweise in der EP 2910585 A, [0024]-[0041], beschrieben. Beispiele zu Polycarbonatpolyolen und ihre Herstellung finden sich unter anderem in der EP 1359177 A. Die Herstellung geeigneter Polyetheresterpolyole ist unter anderem in der WO 2010/043624 A und in der EP 1 923 417 A beschrieben.

Als Hydroxylgruppen-aufweisende Verbindungen können auch Polymerpolyole, PHD-Polyole und PIPA-Polyole in Komponente **A1** eingesetzt werden. Polymerpolyole sind Polyole, die Anteile von durch radikalische Polymerisation geeigneter Monomere wie Styrol oder Acrylnitril in einem Basispolyol erzeugten festen Polymeren enthalten. PHD (Polyharnstoffdispersion)-Polyole sind besonders bevorzugt für die Herstellung von flammgeschützten Weichschaumstoffen und werden beispielsweise hergestellt durch in situ Polymerisation eines Isocyanats oder einer Isocyanat-Mischung mit einem Diamin und/oder Hydrazin in einem Polyol, vorzugsweise einem Polyetherpolyol. Bevorzugt enthält oder besteht Komponente **A1** aus einem füllstoffhaltigen Polyol, insbesondere einer Polyharnstoff-Dispersion in einem Polyether, wobei der Füllstoffanteil bei 10 bis 20 Gew.-% bezogen auf Komponente **A1** beträgt.

Vorzugsweise wird die PHD-Dispersion hergestellt durch Umsetzung einer Isocyanat-Mischung aus 75 bis 85 Gew.-% 2,4-Toluylendiisocyanat (2,4-TDI) und 15 bis 25 Gew.-% 2,6-Toluylendiisocyanat (2,6-TDI) mit einem Diamin und/oder Hydrazin in einem Polyetherpolyol, vorzugsweise einem Polyetherpolyol, hergestellt durch Alkoxylierung eines trifunktionellen Starters (wie beispielsweise Glycerin und/oder Trimethylolpropan). Verfahren zur Herstellung von PHD-Dispersionen sind beispielsweise beschrieben in US 4,089,835 und US 4,260,530. Bei den PIPA-Polyolen handelt es sich um durch Polyisocyanat-Polyaddition mit Alkanolaminen-modifizierte Polyetherpolyole, wobei das Polyetherpolyol eine Funktionalität von 2,5 bis 4 und eine Hydroxylzahl von ≥ 3 mg KOH/g bis ≤ 112 mg KOH/g (Molekulargewicht 500 bis 18000) aufweist. PIPA-Polyole sind in GB 2 072 204 A, DE 31 03 757 A1 und US 4 374 209 A eingehend beschrieben.

Neben den oben beschriebenen Polyolen und Isocyanat-reaktiven Verbindungen können in der Komponente **A1** weitere Isocyanat-reaktive Verbindungen enthalten sein, beispielsweise Graft-Polyole, Polyamine, Polyaminoalkohole und Polythiole. Selbstverständlich umfassen die beschriebenen Isocyanat-reaktiven Komponenten auch solche Verbindungen mit gemischten Funktionalitäten.

Für die Herstellung von Polyurethanschäumen im Kaltschaumverfahren werden bevorzugt mindestens zwei Hydroxylgruppen aufweisenden Polyether mit einer OH-Zahl von > 20 bis < 50 mg KOH/g eingesetzt, wobei die OH-Gruppen zu > 80 Mol-% aus primärem OH-Gruppen bestehen (Bestimmung mittels $^{1}$H-NMR (z.B. Bruker DPX 400, Deuterochloroform)). Besonders bevorzugt beträgt die OH-Zahl > 25 bis < 40 mg KOH/g, ganz besonders bevorzugt >

25 bis < 35 mg KOH/g.

Gegebenenfalls werden bevorzugt zusätzlich in der Komponente **A1** Verbindungen mit mindestens zwei gegenüber Isocyanaten reaktionsfähigen Wasserstoffatomen und einer OH-Zahl von ≥ 280 bis < 4000 mg KOH/g, bevorzugt ≥ 400 bis ≤ 3000 mg KOH/g, besonders bevorzugt ≥ 1000 bis ≤ 2000 mg KOH/g eingesetzt. Hierunter sind Hydroxylgruppen und/oder Aminogruppen und/oder Thiolgruppen und/oder Carboxylgruppen aufweisende Verbindungen zu verstehen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8, vorzugsweise 2 bis 4, gegenüber Isocyanaten reaktionsfähige Wasserstoffatome auf. Beispielsweise können Ethanolamin, Diethanolamin, Triethanolamin, Sorbit und/oder Glycerin eingesetzt werden. Weitere Beispiele für Verbindungen, die als Kettenverlängerungsmittel oder Vernetzungsmittel verwendet werden können, werden in EP-A 0 007 502, Seite 16-17, beschrieben.

Komponente **A2**

Bevorzugt umfasst Komponente **A2** ein chemisches oder physikalisches Treibmittel, ein (hydro)fluoriertes Olefin oder Wasser oder Mischungen von diesen, insbesondere ist das Treibmittel Wasser. Als chemische Treibmittel werden Substanzen bezeichnet die mit Isocyanatgruppen reagieren und dadurch Gase wie z.B. Kohlendioxid und/oder Kohlenstoffmonoxid gebildet werden. Als chemische Treibmittel können Wasser, Ameisensäure, Essigsäure, Oxalsäure, Ricinolsäure, Carbamate, carboxylgruppenhaltige Verbindungen und Gemische daraus verwendet werden. Als chemisches Treibmittel wird bevorzugt Wasser eingesetzt.

Physikalische Treibmittel sind z.B. niedrig siedende Kohlenwasserstoffe. Geeignet sind insbesondere Flüssigkeiten, welche gegenüber der Isocyanatkomponente **B** inert sind und Siedepunkte unter 100 °C, vorzugsweise unter 50 °C bei Atmosphärendruck aufweisen, so dass sie unter dem Einfluss der exothermen Polyadditionsreaktion verdampfen. Beispiele derartiger, vorzugsweise verwendeter Flüssigkeiten sind Alkane, wie Heptan, Hexan, n- und iso-Pentan, vorzugsweise technische Gemische aus n- und iso-Pentanen, n- und isoButan und Propan, Cycloalkane, wie Cyclopentan und/oder Cyclohexan, Ether, wie Furan, Dimethylether und Diethylether, Ketone, wie Aceton und Methylethylketon, Carbonsäurealkylester, wie Methylformiat, Dimethyloxalat und Ethylacetat und halogenierte Kohlenwasserstoffe, wie Methylenchlorid, Dichlormonofluormethan, Difluormethan, Trifluormethan, Difluorethan, Tetrafluorethan, Chlordifluorethane, 1,1-Dichlor-2,2,2-trifluorethan, 2,2-Dichlor-2-fluorethan und Heptafluorpropan. Auch Gemische dieser niedrigsiedenden Flüssigkeiten untereinander und/oder mit anderen substituierten oder unsubstituierten Kohlenwasserstoffen können verwendet werden. Die physikalischen Treibmittel können dabei auch in Form einer Emulsion aus kleinen Tröpfchen eingesetzt werden. Auch bevorzugt ist der Einsatz von (hydro)fluorierten Olefinen ("HFO"), wie z.B. HFO 1233zd(E) (Trans-1-chlor-3,3,3-trifluor-1-propen) oder HFO 1336mzz(Z) (cis-1,1,1,4,4,4-Hexafluor-2-buten) oder Additive wie FA 188 von 3M (1,1,1,2,3,4,5,5,5-Nonafluor-4-(trifluormethyl)pent-2-en), sowie der Einsatz von Kombinationen dieser Treibmittel. Vorzugsweise werden keine halogenierten Kohlenwasserstoffe als Treibmittel verwendet.

Vorzugsweise werden als physikalische Treibmittel Pentanisomere oder Mischungen von Pentanisomeren verwendet. Als Treibmittel können Mischungen von chemischen und physikalischen Treibmitteln oder nur Vertreter einer Gruppe von Treibmitteln eingesetzt werden. Bevorzugt als Treibmittelkomponente verwendet werden Wasser und/oder physikalische Treibmittel. Insbesondere bevorzugt wird das Treibmittel aus der Gruppe bestehend aus Wasser, Pentanisomeren, (hydro)fluorierten Olefinen und Mischungen dieser Treibmittel gewählt.

Komponente **A3**

Bevorzugt umfassen die Hilfs- und Zusatzstoffe **A3** einen Katalysator, insbesondere ein aliphatisches Amin, insbesondere ein Amin mit OH- oder NH-Gruppen.

Als Komponente **A3** werden gegebenenfalls Hilfs- und Zusatzstoffe verwendet wie Katalysatoren (Aktivatoren), oberflächenaktive Zusatzstoffe (Tenside), wie Emulgatoren und Schaumstabilisatoren insbesondere solche mit niedriger Emission wie beispielsweise Produkte der Tegostab® LF2-Serie, Additive wie Reaktionsverzögerer (z.B. sauer reagierende Stoffe wie Salzsäure oder organische Säurehalogenide), Zellregler (wie beispielsweise Paraffine oder Fettalkohole oder Dimethylpolysiloxane), Pigmente, Farbstoffe, Stabilisatoren gegen Alterungs- und Witterungseinflüsse, Weichmacher, fungistatisch und bakteriostatisch wirkende Substanzen, Füllstoffe (wie beispielsweise Bariumsulfat, Kieselgur, Ruß- oder Schlämmkreide) und Trennmittel.

Diese gegebenenfalls mitzuverwendenden Hilfs- und Zusatzstoffe werden beispielsweise in der EP-A 0 000 389, Seiten 18-21, beschrieben. Weitere Beispiele von gegebenenfalls erfindungsgemäß mitzuverwendenden Hilfs- und Zusatzstoffe sowie Einzelheiten über Verwendungs- und Wirkungsweise dieser Hilfs- und Zusatzstoffe sind im Kunststoff-Handbuch, Band VII, herausgegeben von G. Oertel, Carl-Hanser-Verlag, München, 3. Auflage, 1993, z.B. auf den Seiten 104-127 beschrieben. Als Katalysatoren können beispielsweise aliphatische tertiäre Amine (beispielsweise Triethylamin, Tetramethylbutandiamin), cycloaliphatische tertiäre Amine (beispielsweise 1,4-Diaza(2,2,2)bicyclooctan), aliphatische Aminoether (beispielsweise Dimethylaminoethylether und N,N,N-Trimethyl-N-hydroxyethyl-bisaminoethylether), cycloaliphatische Aminoether (beispielsweise N-Ethylmorpholin), aliphatische Amidine, cycloaliphatische Amidine, Harnstoff, Derivate des Harnstoffs (wie beispielsweise Aminoalkylharnstoffe, siehe zum Beispiel EP-A 0 176 013, insbesondere (3-Dimethylaminopropylamin)-harnstoff), und Zinn-Katalysatoren (wie beispielsweise Dibutylzinnoxid, Dibutylzinndilaurat, Zinnoctoat) eingesetzt werden.

Als Katalysatoren werden bevorzugt

a) Harnstoff, Derivate des Harnstoffs und/oder
b) Amine und Aminoether, welche jeweils eine funktionelle Gruppe enthalten, die mit dem Isocyanat chemisch reagiert. Vorzugsweise ist die funktionelle Gruppe eine HydroxylGruppe oder eine primäre oder sekundäre Aminogruppe.
Diese besonders bevorzugten Katalysatoren haben den Vorteil, dass diese ein stark reduziertes Migrations- und Emissionsverhalten aufweisen.

Als Beispiele für besonders bevorzugte Katalysatoren seien genannt: (3-Dimethylaminopropylamin)-Harnstoff, 2-(2-Dimethylaminoethoxy)ethanol, N,N-Bis(3-dimethylaminopropyl)-N-isopropanolamin, N,N,N-Trimethyl-N-hydroxyethyl-bisaminoethylether und 3-Dimethylaminopropylamin.
Bevorzugt werden keine Zinn-Katalysatoren eingesetzt.
Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur der Kunststoffe zu regulieren. Genannt seien beispielsweise Emulgatoren, wie die Natriumsalze von Ricinusölsulfaten oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure; Schaumstabilisatoren, wie Siloxanoxalkylen-Mischpolymerisate und andere Organopolysiloxane, oxethylierte Alkylphenole, oxethylierte Fettalkohole, Paraffinöle, Rizinusöl- bzw. Ricinolsäureester, Türkischrotöl und Erdnussöl, und Zellregler, wie Paraffine, Fettalkohole und Dimethylpolysiloxane. Zur Verbesserung der Emulgierwirkung, der Zellstruktur und/oder Stabilisierung des Schaumes eignen sich ferner die oben beschriebenen oligomeren Acrylate mit Polyoxyalkylen- und Fluoralkanresten als Seitengruppen.

Als Füllstoffe, insbesondere verstärkend wirkende Füllstoffe, sind die an sich bekannten, üblichen organischen und anorganischen Füllstoffe, Verstärkungsmittel, Beschwerungsmittel, Mittel zur Verbesserung des Abriebverhaltens in Anstrichfarben, Beschichtungsmittel usw. zu nennen. Im Einzelnen seien beispielhaft genannt: anorganische Füllstoffe wie silikatische Mineralien, beispielsweise Schichtsilikate wie Antigorit, Serpentin, Hornblenden, Amphibole, Chrisotil, Montmorillonit und Talkum, Metalloxide, wie Kaolin, Aluminiumoxide, Titanoxide und Eisenoxide, Metallsalze, wie Kreide, Schwerspat und anorganische Pigmente, wie Cadmiumsulfid und Zinksulfid, sowie Glas u.a. sowie natürliche und synthetische faserförmige Mineralien wie Wollastonit, Metall- und insbesondere Glasfasern verschiedener Länge, die gegebenenfalls geschlichtet sein können. Als organische Füllstoffe kommen beispielsweise in Betracht: Kohle, Melamin, Kolophonium, Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestern und insbesondere Kohlenstofffasern.

Komponente **A4**

Komponente **A4** enthält oder besteht aus mindestens einem Phosphinat-Salz der Formel

$$M^{m+}(R^1R^2PO_2)^-_m \qquad (I)$$

wobei,

M ein Kation ist,
m eine ganze Zahl ≥ 1 ist, bevorzugt ist m=1, 2 oder 3, und
$R^1$ und $R^2$ unabhängig voneinander ausgewählt sind aus der Gruppe bestehend aus H, $C_1$-$C_4$ Alkylgruppen und $C_6$-$C_{12}$ Arylgruppen, bevorzugt sind $R^1$ und $R^2$ $C_1$-$C_4$ Alkylgruppen.

Bevorzugt enthält das Phosphinat-Salz kein Zerewitinoff-aktives Wasserstoffatom enthält. Unter einem Zerewitinoff-aktiven H-Atom wird im Rahmen der vorliegenden Erfindung ein azides H-Atom oder "aktives" H-Atom verstanden. Ein solches kann in an sich bekannter Weise durch eine Reaktivität mit einem entsprechenden Grignard-Reagenz ermittelt werden. Die Menge an Zerewitinoff-aktiven H-Atomen wird typischerweise über die Methanfreisetzung gemessen, die bei einer Reaktion der zu überprüfenden Substanz mit Methylmagnesiumbromid ($CH_3$-MgBr) gemäß der folgenden Reaktionsgleichung (Formel 1) frei wird:

$$CH_3\text{-}MgBr + ROH \rightarrow CH_4 + Mg\,(OR)Br \qquad (1)$$

Zerewitinoff-aktive H-Atome stammen typischerweise von C-H aziden organischen Gruppen, -OH, -SH, $-NH_2$ oder -NHR mit R als organischem Rest sowie -COOH.

Bevorzugt beträgt der Anteil des Phosphinat-Salzes in Komponente A4 mindestens 60 Gew.-%, insbesondere mindestens 80 Gew.-%, jeweils bezogen auf das Gewicht der Komponente **A4.** Bevorzugt beträgt der Anteil des Phosphinat-Salzes in der Zusammensetzung 0,1 bis 10 Gew.-%, insbesondere 1 bis 6 Gew.-%, jeweils bezogen auf die Zusammensetzung.

Bevorzugt ist das Phosphinat-Salz Natriumdiethylphosphinat, Zink- oder Aluminiumdiethylphosphinat. Bevorzugt enthält oder besteht Komponente A4 aus Phosphinat-Salzen der folgenden Formeln (II) und (III)

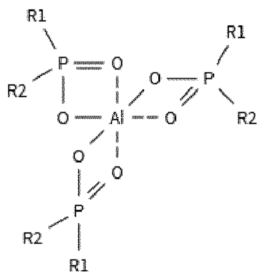
(II)

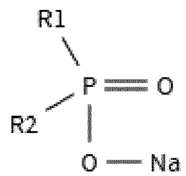
(III)

wobei M = Aluminium oder M = Natrium oder M=Zink ist.

Bevorzugt sind die Phosphinate mit einem Phosphorgehalt von >20 Gew.-% im Molekül, ganz besonders bevorzugt >23 Gew.-%.

Bevorzugt sind Phosphinate, die als Lösung in einer der anderen Komponenten in die Reaktion eingebracht und damit besonders gut dispergiert werden können.

In einer bevorzugten Ausführungsform reagiert das Phosphinat nicht mit Isocyanat.

In einer bevorzugten Ausführungsform kann die Zusammensetzung zusätzlich zu den Phosphinaten weitere Flammschutzmittel wie beispielsweise Phosphate oder Phosphonate, wie z.B. Diethylethanphosphonat (DEEP), Triethylphosphat (TEP), Diethylhydroxymethylphosphonat und Dimethylpropylphosphonat (DMPP), oder handelsübliche halogenhaltige Flammschutzpolyole, bevorzugt Flammschutzmittel ausgewählt aus der Gruppe bestehend aus bromierte Ester, bromierte Ether (Ixol) oder bromierte Alkohole wie Dibromneopentylakohol, Tribromneopentylalkohol, Tetrabromphthalat Diol (DP 54) und PHT-4-Diol, sowie chlorierte Phosphate wie Tris(2-chlorethyl)phosphat, Tris-(2-chlorpropyl)phosphat (TCPP), Tris(1,3-dichlorpropyl)phosphat, Trikresylphosphat, Diphenylkresylphosphat (DPK), Tris-(2,3-dibrompropyl)phosphat, Tetrakis-(2-chlorethyl)-ethylendiphosphat, Dimethylmethanphosphonat, Diethanolaminomethylphosphonsäurediethylester enthalten. Bevorzugt werden die Phosphinate als alleiniges Flammschutzmittel eingesetzt. In einer anderen bevorzugten Ausführungsform enthalten die Polyurethan-Weichschaumstoffe keine weiteren Flammschutzmittel, insbesondere keine halogenhaltigen Flammschutzmittel.

Komponente **B**

Als Komponente **B** werden aliphatische, cycloaliphatische, araliphatische, aromatische und heterocyclische Polyisocyanate eingesetzt, wie sie z.B. von W. Siefken in Justus Liebigs Annalen der Chemie, 562, Seiten 75 bis 136, beschrieben werden, beispielsweise solche der Formel (V)

$$Q(NCO)n \qquad (V)$$

in der

n = 2-4, vorzugsweise 2-3,
und
Q einen aliphatischen Kohlenwasserstoffrest mit 2-18, vorzugsweise 6-10 C-Atomen, einen cycloaliphatischen Kohlenwasserstoffrest mit 4-15, vorzugsweise 6-13 C-Atomen oder einen araliphatischen Kohlenwasserstoffrest mit 8-15, vorzugsweise 8-13 C-Atomen bedeuten.

Beispielsweise handelt es sich um solche Polyisocyanate, wie sie in der EP-A 0 007 502, Seite 7-8, beschrieben

werden. Besonders bevorzugt werden in der Regel die technisch leicht zugänglichen Polyisocyanate, z.B. das 2,4- und 2,6-Toluylendiisocyanat, sowie beliebige Gemische dieser Isomeren ("TDI"); Polyphenylpolymethylenpolyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisenden Polyisocyanate ("modifizierte Polyisocyanate" oder "Prepolymere"), insbesondere solche modifizierten Polyisocyanate, die sich vom 2,4- und/oder 2,6-Toluylendiisocyanat bzw. vom 4,4'- und/oder 2,4'- und/oder 2,2'-Diphenylmethandiisocyanat ableiten. Vorzugsweise wird als Komponente **B** mindestens eine Verbindung ausgewählt aus der Gruppe bestehend aus 2,4- und 2,6-Toluylendiisocyanat, 4,4'- und 2,4'- und 2,2'-Diphenylmethandiisocyanat und Polyphenylpolymethylenpolyisocyanat ("Mehrkern-MDI", "pMDI"), besonders bevorzugt mindestens eine Verbindung ausgewählt aus der Gruppe bestehend aus 4,4'- und 2,4'- und 2,2'-Diphenylmethandiisocyanat und Polyphenylpolymethylenpolyisocyanat ("Mehrkern-MDI" oder "pMDI") eingesetzt. Bevorzugt ist Komponente **B** ausgewählt aus der Gruppe bestehend aus 2,4- und 2,6-Toluylendiisocyanat, 4,4'- und 2,4'- und 2,2'-Diphenylmethandiisocyanat, Polyphenylpolymethylenpolyisocyanat ("Mehrkern-MDI") und Polyisocyanaten, die sich von 2,4- und/oder 2,6-Toluylendiisocyanat und/oder von 4,4'- und/oder 2,4'- und/oder 2,2'- Diphenylmethandiisocyanat ableiten und Carbodiimidgruppen, Urethangruppen, Allophanatgruppen, Isocyanuratgruppen, Harnstoffgruppen oder Biuretgruppen aufweisen.

Die Gemische aus Diphenylmethandiisocyanat und Polyphenylenpolymethylenpolyisocyanat ("Mehrkern-MDI" oder "pMDI") haben einen bevorzugten Monomergehalt zwischen 50 und 100 Gew.-%, bevorzugt zwischen 60 und 95 Gew.-%, besonders bevorzugt zwischen 75 und 90 Gew.-%. Der NCO-Gehalt des verwendeten Polyisocyanates sollte vorzugsweise über 25 Gew.-%, bevorzugt über 30 Gew.-%, besonders bevorzugt über 31,4 Gew.-% liegen. Vorzugsweise sollte das eingesetzte MDI einen Gehalt an 2,4'-Diphenylmethandiisocyanat von mindestens 3 Gew.-%, bevorzugt mindestens 15 Gew.-% aufweisen.

Unter der Isocyanat-Kennzahl (auch Kennzahl oder Isocyanat-Index genannt) wird der Quotient aus der tatsächlich eingesetzten Stoffmenge [Mol] an Isocyanat-Gruppen und der tatsächlich eingesetzten Stoffmenge [Mol] an Isocyanat-reaktiven Gruppen, multipliziert mit 100, verstanden:

$$\text{Kennzahl} = (\text{Mole Isocyanat-Gruppen} / \text{Mole Isocyanat-reaktive Gruppen}) * 100$$

Der NCO-Wert (auch: NCO-Gehalt, Isocyanatgehalt) wird bestimmt mittels EN ISO 11909:2007. Falls nicht anders angegeben, handelt es sich um die Werte bei 25°C.

Neben den vorstehend genannten Polyisocyanaten können anteilig auch modifizierte Diisocyanate mit Uretdion-, Isocyanurat-, Urethan-, Carbodiimid, Uretonimin, Allophanat, Biuret-, Amid-, Iminooxadiazindion- und/oder Oxadiazintrionstruktur sowie nichtmodifiziertes Polyisocyanat mit mehr als 2 NCO-Gruppen pro Molekül wie zum Beispiel 4-Isocyanatomethyl-1,8-octandiisocyanat (Nonantriisocyanat) oder Triphenylmethan-4,4',4"-triisocyanat mit eingesetzt werden.

In einer bevorzugten Ausführungsform werden als Komponente **B** Mischungen aus MDI- und TDI-Isomeren verwendete, wobei das Gewichtsverhältnis von MDI-Isomeren zu TDI-Isomeren zwischen 4:1 und 1:4 liegt. Bevorzugt enthält die Mischung aus MDI- und TDI-Isomeren 15-75 Gew.-% 4,4-MDI, 0-30 Gew.-% 2,4-MDI, 10-30 Gew.-% polymeres MDI und Homologe, wobei die zu 100 Gew.-% fehlenden Anteile aus TDI-Isomere bestehen.

Die bevorzugten Ausführungsformen können einzeln oder auch miteinander verknüpft ausgeführt werden.

In einer bevorzugten Ausführungsform wird der Polyurethan-Weichschaum erhalten wird oder ist erhältlich durch Umsetzung einer Zusammensetzung, enthaltend oder bestehend aus

- 67 Gew.-% bis 99,68 Gew.-% von Komponente **A1**,
- 0,2 Gew.-% bis 20 Gew.-% von Komponente **A2,**
- 0,02 Gew.-% bis 5 Gew.-% von Komponente **A3,**
- 0,1 Gew.-% bis 8 Gew.-% von Komponente **A4,**
  wobei die Gew.-% jeweils bezogen sind auf die Summe Komponenten A1, A2, A3 und A4,

und Komponente B,
bei einer Kennzahl in einem Bereich von 75 bis 95.

In einer weiteren bevorzugten Ausführungsform wird der Polyurethan-Weichschaum erhalten oder ist erhältlich durch Umsetzung einer Zusammensetzung enthaltend oder bestehend aus

- 67 Gew.-% bis 99,68 Gew.-% von Komponente **A1**, bevorzugt eines Polyetherpolyols oder einer Mischung aus

Polyetherpolyolen bevorzugt auf Basis von Propylenoxid und Ethylenoxid mit einem mittleren Äquivalentgewicht von 0,8-2,2 kg/mol und einer mittleren Funktionalität von 2,4-4,4,

- 0,2 Gew.-% bis 20 Gew.-% von Komponente **A2,** bevorzugt Wasser,

- 0,02 Gew.-% bis 5 Gew.-% von Komponente **A3,** bevorzugt aliphatische Amine als Katalysatoren, bevorzugt solche, die OH- oder NH-Gruppen enthalten

- 0,1 Gew.-% bis 8 Gew.-% von Komponente **A4,**
wobei die Gew.-% jeweils bezogen sind auf die Summe Komponenten A1, A2, A3 und A4,

und Komponente B.

In einer weiteren bevorzugten Ausführungsform kann in der Komponente **A** und/oder **B** Polyhydrazodicarbonamid mit 1 bis 10 Gew.-%, bezogen auf das Gesamtgewicht der Komponenten **A** und **B,** vorliegen.

Ein weiterer Gegenstand der Erfindung ist Polyurethan-Weichschaum, erhalten durch oder erhältlich durch das oben dargestellte Verfahren. Bevorzugt weist der so erhaltene oder erhältliche Polyurethan-Weichschaumstoff eine Rohdichte nach DIN EN ISO 845 (Oktober 2009) von 10 $kg/m^3$ bis 90 $kg/m^3$, insbesondere von 20 $kg/m^3$ bis 60 $kg/m^3$, auf. Bei geschäumten Polyurethan-Werkstoffen wird eine Reihe der technologischen Eigenschaften weitgehend durch die Rohdichte beeinflusst. Dabei soll der Zusatz "Roh" zum Ausdruck bringen, dass das gesamte Volumen des Prüfkörpers an dem die Dichte bestimmt wird, zur Berechnung herangezogen wird und nicht nur das weit geringere Volumen, das von der Masse des Polymeren ausgefüllt ist (G.W. Becker, D. Braun: Polyurethane. In: G. Oertel (Ed.), Kunststoff Handbuch, München, Carl Hanser Verlag, 1993, 3. A., Kap 9.2.4., S. 532).

Bevorzugt weist der so erhaltene oder erhältliche Polyurethan-Weichschaumstoff eine Stauchhärte nach DIN EN ISO 3386-1 von Oktober 2015 von 2 kPa bis 20 kPa, insbesondere von 3 kPa bis 7 kPa, auf.

Bevorzugt weist der so erhaltene oder erhältliche Polyurethan-Weichschaumstoff eine Brenndauer von höchstens 79 Sekunden, insbesondere von höchstens 75 Sekunden, auf, wobei die Brenndauer in Anlehnung an den britischen Standard BS 5852:1990, Teil 2 ermittelt wird, bei dem ein Probenkörper aus dem Polyurethan-Weichschaumstoff ohne textile Deckschicht mit der Zündquelle entflammt wurde.

Der Herstellungsprozess von PUR-Weichschäumen kann anhand unterschiedlicher Zeitpunkte charakterisiert werden, die sich auf unterschiedliche Zeitpunkte des Verschäumungsprozesses des PUR-Weichschaums beziehen. Der Zeitpunkt, an dem eine Expansion des Gemisches aus Isocyanat und Isocyanat-reaktiver Komponent beginnt, ist die Liegezeit $t_L$. Der Zeitpunkt, an dem das polymere Netzwerk so weit entwickelt ist, dass es beim Eintauchen eines Fremdkörpers in den Schaumstoff zum ersten Mal an dem Fremdköper klebt und beim Herausziehen Polymerfäden zieht, ist die Fadenziehzeit, auch Abbindezeit oder Gelzeit $t_A$. Nach der Fadenziehzeit ist das Polymer bereits vernetzt. Der Zeitpunkt, zu dem keine weitere Expansion des Polymerschaums zu beobachten ist die Steigzeit ts.

Bei der Herstellung des Polyurethan-Schaums in einem Formschaumverfahren sollte nach dem Zeitpunkt der Abbinde- oder Fadenziehzeit $t_A$ möglichst wenig Relativbewegung zwischen Schaum und der Wand der Form mehr auftreten. Eine Bewegung des Schaumes im Kern zu einem Zeitpunkt, zu dem der Schaum schon gut an der Wand haftet, führt zu Störungen im Schaumstoff, Verzerrungen in der Zellstruktur und zu nachteiligen Eigenschaften des Fertigteils. Das Verhältnis von Steigzeit zu Fadenziehzeit wird im Hinblick auf die Bewegung der noch nicht fertig ausgeschäumten Zusammensetzung für den Polyurethan-Schaum auch als "Nachdrücken" bezeichnet. Mit dieser Kenngröße kann die Reaktionskinetik einer Zusammensetzung für die Herstellung eines Polyurethan-Schaums beurteilt werden. Das Verhältnis von Steigzeit zu Fadenziehzeit liegt üblicherweise in einem Bereich von 1,8 bis 2,1. Bevorzugt liegt das Verhältnis von Steigzeit zu Fadenziehzeit in einem Bereich von 1,2 bis 1,7, bevorzugter von 1,4 bis 1,6.

Wenn der Polyurethan-Weichschaumstoff in einem Formschaumverfahren hergestellt wird, sind eine möglichst lange Liegezeit $t_L$ und eine kurze Steigzeit ts von weniger als zwei Minuten bevorzugt. Üblicherweise wird das fertig aufgeschäumte Formteil aus Polyurethan-Weichschaumstoff fünf Minuten nach dem Einfüllen der Reaktionsmischung in die Form aus dieser gelöst (Entformzeit).

Bei der Einstellung der Reaktionskinetik werden zudem die verfügbare Leistung der Dosiermaschine, das auszufüllende Volumen und die notwendige Schaumstoffdichte, die sich aus den vom Verbraucher gestellten Ansprüchen an die mechanischen Eigenschaften ergibt, berücksichtigt.

Eine weitere Ausführungsform der Erfindung betrifft die Verwendung von so erhaltenem oder erhältlichen Polyurethan-Weichschaumstoff zur Herstellung von Möbelpolsterungen, Textileinlagen, Matratzen, Automobilsitze, Kopfstützen, Armlehnen, Schwämmen und Bauelementen, sowie Sitz- und Armaturenverkleidungen für Fahrzeuge.

Eine weitere Ausführungsform der Erfindung betrifft die Verwendung eines Phosphinat Salzes gemäß Formel (I)

$$M^{m+}(R^1R^2PO_2)^-_m \qquad (I)$$

wobei,

M ein Kation ist,
m eine ganze Zahl ≥ 1 ist, und
$R^1$ und $R^2$ unabhängig voneinander ausgewählt sind aus der Gruppe bestehend aus H, $C_1$-$C_4$ Alkylgruppen und $C_6$-$C_{12}$ Arylgruppen
als Flammschutzmittel in Polyurethan-Weichschäumen, wobei das Phosphinatsalz bevorzugt Aluminiumdiethylphosphinat oder Natriumdiethylphosphinat ist.

In einer ersten Ausführungsform betrifft die Erfindung ein Verfahren zur Herstellung von Polyurethan-Weichschaum, wobei der Polyurethan-Weichschaum erhalten wird oder erhältlich ist durch Umsetzung einer Zusammensetzung enthaltend oder bestehend aus

- einer Komponente A1 enthaltend oder bestehend aus Verbindungen die gegenüber Isocyanaten reaktiv sind, wobei die Komponente A1 zu mindestens 30 Gew.-%, bezogen auf die Komponente A1, aus Verbindungen mit einer OH-Zahl nach DIN 53240-1 (Juni 2013) von 25-57 mg KOH/g besteht;
- einer Komponente A2 enthaltend Wasser und/oder mindestens ein physikalisches Treibmittel;
- gegebenenfalls einer Komponente A3 enthaltend Hilfs- und Zusatzstoffe;
- einer Komponente A4 enthaltend oder bestehend aus mindestens einem Flammschutzmittel;
- einer Komponente B enthaltend oder bestehend aus Di- und/oder Polyisocyanaten;

bei einer Kennzahl in einem Bereich von 60 bis 115,

dadurch gekennzeichnet, dass
das Komponente A4 mindestens ein Phosphinat-Salz mit der Formel (I) enthält oder daraus besteht:

$$M^{m+}(R^1R^2PO_2)^-_m \qquad (I)$$

wobei,

M ein Kation ist,
m eine ganze Zahl ≥ 1 ist und
$R^1$ und $R^2$ unabhängig voneinander ausgewählt sind aus der Gruppe bestehend aus H, $C_1$-$C_4$ Alkylgruppen und $C_6$-$C_{12}$ Arylgruppen.

In einer zweiten Ausführungsform betrifft die Erfindung ein Verfahren nach Ausführungsform 1, dadurch gekennzeichnet, dass im Phosphinat-Salz nach Formel (I) m=1, 2 oder 3 ist.

In einer dritten Ausführungsform betrifft die Erfindung ein Verfahren nach Ausführungsform 1 oder 2, dadurch gekennzeichnet, dass im Phosphinat-Salz nach Formel (I) $R^1$ und $R^2$ $C_1$-$C_4$ Alkylgruppen sind.

In einer vierten Ausführungsform betrifft die Erfindung ein Verfahren nach einer der vorstehenden Ausführungsformen, dadurch gekennzeichnet, dass das Phosphinat-Salz kein Zerewitinoff-aktives Wasserstoffatom enthält.

In einer fünften Ausführungsform betrifft die Erfindung ein Verfahren nach einer der vorstehenden Ausführungsformen, dadurch gekennzeichnet, dass die Formulierung Zusammensetzung keine Derivate des Melamins, keine Derivate der Cyanursäure und/oder keine Derivate der der Borsäure enthält.

In einer sechsten Ausführungsform betrifft die Erfindung ein Verfahren nach einer der vorstehenden Ausführungsformen, dadurch gekennzeichnet, dass das Phosphinat-Salz Natriumdiethylphosphinat, Zink- oder Aluminiumdiethylphosphinat ist.

In einer siebten Ausführungsform betrifft die Erfindung ein Verfahren nach einer der vorstehenden Ausführungsformen, dadurch gekennzeichnet, dass der Anteil des Phosphinat-Salzes in Komponente A4 mindestens 60 Gew.-%, insbesondere mindestens 80 Gew.-%, jeweils bezogen auf das Gewicht der Komponente A4, beträgt.

In einer achten Ausführungsform betrifft die Erfindung ein Verfahren nach einer der vorstehenden Ausführungsformen, dadurch gekennzeichnet, dass der Anteil des Phosphinat-Salzes in der Zusammensetzung 0,1 bis 10 Gew.-%, insbesondere 1 bis 6 Gew.-%, jeweils bezogen auf die Zusammensetzung, beträgt.

In einer neunten Ausführungsform betrifft die Erfindung ein Verfahren nach einer der vorstehenden Ausführungsformen, dadurch gekennzeichnet, dass die Reaktionsmischung keine halogenhaltigen Flammschutzmittel enthält.

In einer zehnten Ausführungsform betrifft die Erfindung ein Verfahren nach einer der vorstehenden Ausführungsformen, dadurch gekennzeichnet, dass Komponente A1 ein füllstoffhaltiges Polyol, insbesondere eine Polyharnstoff-Dispersion in einem Polyether enthält oder daraus besteht, wobei der Füllstoffanteil bei 10 bis 20 Gew.-% bezogen auf Komponente A1 beträgt.

In einer elften Ausführungsform betrifft die Erfindung ein Verfahren nach einer der vorstehenden Ausführungsformen, dadurch gekennzeichnet, dass die Verbindungen der Komponente A1 ein zahlenmittleres Molekulargewicht nach DIN 55672-1 vom August 2007 von ≥ 300 g/mol bis ≤ 6000 g/mol, , besonders bevorzugt von 4500 g/mol bis 5000 g/mol aufweisen.

In einer zwölften Ausführungsform betrifft die Erfindung ein Verfahren nach einer der vorstehenden Ausführungsformen, dadurch gekennzeichnet, dass das Komponente A2 ein chemisches oder physikalisches Treibmittel, ein (hydro)fluoriertes Olefin oder Wasser oder Mischungen von diesen umfasst, insbesondere ist das Treibmittel Wasser.

In einer dreizehnten Ausführungsform betrifft die Erfindung ein Verfahren nach einer der vorstehenden Ausführungsformen, dadurch gekennzeichnet, dass die Hilfs- und Zusatzstoffe A3 einen Katalysator, insbesondere ein aliphatisches Amin, insbesondere ein Amin mit OH- oder NH-Gruppen, umfassen.

In einer vierzehnte Ausführungsform betrifft die Erfindung ein Verfahren nach einer der vorstehenden Ausführungsformen, wobei Komponente B ausgewählt ist aus der Gruppe bestehend aus 2,4- und 2,6-Toluylendiisocyanat, 4,4'- und 2,4'- und 2,2'-Diphenylmethandiisocyanat, Polyphenylpolymethylenpolyisocyanat ("Mehrkern-MDI") und Polyisocyanaten, die sich von 2,4- und/oder 2,6-Toluylendiisocyanat und/oder von 4,4'- und/oder 2,4'- und/oder 2,2'- Diphenylmethandiisocyanat ableiten und Carbodiimidgruppen, Urethangruppen, Allophanatgruppen, Isocyanuratgruppen, Harnstoffgruppen oder Biuretgruppen aufweisen.

In einer fünfzehnten Ausführungsform betrifft die Erfindung ein Verfahren nach einer der vorstehenden Ausführungsformen, dadurch gekennzeichnet, dass der Polyurethan-Weichschaum erhalten wird oder erhältlich ist durch Umsetzung einer Zusammensetzung enthaltend oder bestehend aus

- 67 Gew.-% bis 99,68 Gew.-% von Komponente A1,
- 0,2 Gew.-% bis 20 Gew.-% von Komponente A2,
- 0,02 Gew.-% bis 5 Gew.-% von Komponente A3,
- 0,1 Gew.-% bis 8 Gew.-% von Komponente A4,

wobei die Gew.-% jeweils bezogen sind auf die Summe Komponenten A1, A2, A3 und A4, und Komponente B, bei einer Kennzahl in einem Bereich von 75 bis 95.

In einer sechzehnten Ausführungsform betrifft die Erfindung ein Verfahren nach einer der vorstehenden Ausführungsformen, dadurch gekennzeichnet, dass das Verfahren ein Formschaumverfahren ist.

In einer siebzehnten Ausführungsform betrifft die Erfindung einen Polyurethan-Weichschaum, erhalten durch oder erhältlich durch ein Verfahren nach einem der Ausführungsformen 1 bis 16.

In einer achtzehnten Ausführungsform betrifft die Erfindung einen Polyurethan-Weichschaum nach Ausführungsform 17, dadurch gekennzeichnet, dass der Polyurethan-Weichschaumstoff eine Rohdichte nach DIN EN ISO 845 (Oktober 2009) von 10 kg/m3 bis 90 kg/m3, insbesondere von 20 kg/m3 bis 60 kg/m3, hat.

In einer neunzehnten Ausführungsform betrifft die Erfindung einen Polyurethan-Weichschaum nach Ausführungsform 17 oder 18, dadurch gekennzeichnet, dass der Polyurethan-Weichschaumstoff eine Stauchhärte nach DIN EN ISO 3386-1 von Oktober 2015 von 2 kPa bis 20 kPa, insbesondere von 3 kPa bis 7 kPa, hat.

In einer zwanzigsten Ausführungsform betrifft die Erfindung einen Polyurethan-Weichschaum nach Ausführungsform 17 bis 19, dadurch gekennzeichnet, dass der Polyurethan-Weichschaumstoff eine Brenndauer von höchstens 79 Sekunden, insbesondere von höchstens 75 Sekunden, hat, wobei die Brenndauer in Anlehnung an den britischen Standard BS 5852:1990, Teil 2 ermittelt wird, bei dem ein Probenkörper aus dem Polyurethan-Weichschaumstoff ohne textile Deckschicht mit der Zündquelle entflammt wurde.

In einer einundzwanzigsten Ausführungsform betrifft die Erfindung die Verwendung von Polyurethan-Weichschaumstoff nach einer der Ausführungsformen 17 bis 20 zur Herstellung von Möbelpolsterungen, Textileinlagen, Matratzen, Automobilsitze, Kopfstützen, Armlehnen, Schwämmen und Bauelementen, sowie Sitz- und Armaturenverkleidungen für Fahrzeuge.

In einer zweiundzwanzigstens Ausführungsform betrifft die Erfindung die Verwendung eines Phosphinat Salzes gemäß Formel (I)

$$M^{m+}(R^1R^2PO_2)^-_m \qquad (I)$$

wobei,

M ein Kation ist,
m eine ganze Zahl ≥ 1 ist, und
$R^1$ und $R^2$ unabhängig voneinander ausgewählt sind aus der Gruppe bestehend aus H, C1-C4 Alkylgruppen und C6-C12 Arylgruppen
als Flammschutzmittel in Polyurethan-Weichschäumen, wobei das Phosphinatsalz bevorzugt Aluminiumdiethylphosphinat oder Natriumdiethylphosphinat ist.

**Beispiele Teil 1**

Die vorliegende Erfindung wird anhand der nachfolgenden Beispiele weiter erläutert, ohne jedoch darauf beschränkt zu sein.

**Glossar**

| | |
|---|---|
| Polyol | Suspension von 15 Gew.-% eines Umsetzungsproduktes aus Toluylendiisocyanat (TDI) und Hydrazinhydrat in 85 Gew.-% eines Glyzerin-gestarteten Polyalkylenoxids, Molekulargewicht des Produkts = $M_n$ =4,8 kg/mol Das Polyol inclusive Feststoffanteil weist eine Hydroxylzahl nach DIN 53240-1 (Juni 2013) von 28 mg KOH/g, eine Viskosität von 3,6 Pa*s (25°C) und eine Dichte von 1083 kg/$m^3$ auf. |
| P 1 | Nicht-nanoteiliges Aluminiumdiethylphosphinat (Exolit® OP935, Clariant) |
| P 2 | roter Phosphor (Exolit® RP6520, Clariant) |
| P 3 | oligomere organische Phosphate (Exolit® OP550, Clariant) |
| P 4 | Ammoniumpolyphosphat (Exolit® AP422, Clariant) |
| P 5 | oligomere organische Phosphonate (Exolit® OP560, Clariant) |
| P 6 | Triethylphosphat |
| P 7 | Trischloropropylphosphat, halogeniertes Flammschutzmittel (Levagard PP, Lanxess) |
| P8 | Natriumdiethylphosphinat (Exolit® OP L 1030, Clariant) gelöst im Treibmittel. |
| P9 | Struvit, Ammoniummagnesiumphosphat (Hydrat) |
| N1 | Melamin, halogenfreies, stickstoffbasiertes Flammschutzmittel |
| N2 | Dicyandiamid, halogenfreies, stickstoffbasiertes Flammschutzmittel |
| Z1 | Zinkborat, halogenfreies, borbasiertes Flammschutzmittel |
| C1 | 2-[[2-[2-(Dimethylamino)ethoxy]ethyl]methylamino]ethanol, (Jeffcat® ZF-10, Huntsman) mit einer berechneten Hydroxylzahl von 295 mg KOH/g, Katalysator |
| C2 | 3-Dimethylaminopropylharnstoff in Tetraethylenglycol (Dabco® NE 1070, Evonik) Katalysator |
| C3 | Harnstoff |
| S1 | Polyether-modifiziertes Oligodimethylsiloxan als Schaumstabilisator |
| Treibmittel | Wasser |
| Isocyanat VT | Mischung aus 70 Gew.-% Toluylendiisocyanat (Isomerengemisch 80:20) und 30 Gew.-% polymerem MDI (Viskosität 0,2 Pa*s bei 25°C, 315 g NCO/kg) (Covestro) |

**Herstellung von PUR-Weichschäumen**

Zur Herstellung der PUR-Weichschaumstoffe wurde die Polyolkompente in einem Pappbecher mit Blechboden (Volumen: ca. 850 ml) vorgelegt und mit einem Rührwerk (Fa. Pendraulik) mit Standardrührscheibe (d = 64 mm) bei 4200 U/min 45 Sekunden lang mit Luft beladen. Das Flammschutzmittel wurde der Polyolkomponente zugesetzt. Danach wurde die Isocyanatkomponente zugesetzt und die Mischung mit einem Rührwerk für 5 Sekunden intensiv vermischt. Die einzelnen Zusammensetzungen der für die Polyurethan-Schäume sind in Tabelle 1 dargestellt.

**Tabelle 1**

| Erfindungsgemäß | | | Vergleichsbeispiele | | | | | | | | | |
|---|---|---|---|---|---|---|---|---|---|---|---|---|
| **g/kg** | E2 | E1 | V0 | V7 | V6 | V1 | V3 | V5 | V4 | V9 | V8 | V10 | V2 |
| Polyol | 721 | 687 | 724 | 687 | 687 | 687 | 687 | 687 | 687 | 687 | 687 | 687 | 687 |
| S1 | 5 | 5 | 5 | 5 | 5 | 5 | 5 | 5 | 5 | 5 | 5 | 5 | 5 |
| C3 | 6 | 6 | 6 | 6 | 6 | 6 | 6 | 6 | 6 | 6 | 6 | 6 | 6 |
| $H_2O$ | 19 | 18 | 19 | 18 | 18 | 18 | 18 | 18 | 18 | 18 | 18 | 18 | 18 |
| C1 | 0 | 0 | 0 | 0 | 0 | 0 | 0 | 0 | 0 | 0 | 0 | 0 | 0 |
| C2 | 4 | 7 | 8 | 7 | 7 | 7 | 7 | 7 | 7 | 7 | 7 | 7 | 7 |

(fortgesetzt)

| Erfindungsgemäß | | | Vergleichsbeispiele | | | | | | | | | |
|---|---|---|---|---|---|---|---|---|---|---|---|---|
| **g/kg** | E2 | E1 | V0 | V7 | V6 | V1 | V3 | V5 | V4 | V9 | V8 | V10 | V2 |
| P8 | 11 | | - | - | - | - | - | - | - | - | - | - | - |
| P7 | - | - | - | 51 | - | - | - | - | - | - | - | - | - |
| P6 | - | - | - | - | 51 | - | - | - | - | - | - | - | - |
| N1 | - | - | - | - | - | 51 | - | - | - | - | - | - | - |
| P3 | - | - | - | - | - | - | 51 | - | - | - | - | - | - |
| P5 | - | - | - | - | - | - | - | 51 | - | - | - | - | - |
| P4 | - | - | - | - | - | - | - | - | 51 | - | - | - | - |
| P9 | - | - | - | - | - | - | - | - | - | - | 51 | - | - |
| P1 | - | 51 | - | - | - | - | - | - | - | - | - | - | - |
| Z1 | - | - | - | - | - | - | - | - | - | - | - | 51 | - |
| P2 | - | - | - | - | - | - | - | - | - | - | - | - | 51 |
| N2 | - | - | - | - | - | - | - | - | - | 51 | - | - | - |
| VT | 234 | 226 | 238 | 226 | 226 | 226 | 226 | 226 | 226 | 226 | 226 | 226 | 226 |
| Summe | 1000 | 1000 | 1000 | 1000 | 1000 | 1000 | 1000 | 1000 | 1000 | 1000 | 1000 | 1000 | 1000 |
| Index | 85 | 85 | 85 | 85 | 85 | 85 | 85 | 85 | 85 | 85 | 85 | 85 | |

**Kinetik des Herstellungsprozesses**

Zur Bestimmung der charakteristischen Reaktionszeiten wurde zu Beginn der Vermischung eine Stoppuhr gestartet und die Reaktionskinetik an dem Reaktionsgemisch im Becher bestimmt. Die Liegezeit $t_L$ definiert den Zeitpunkt, wenn das Reaktionsgemisch beginnt zu expandieren (Einsetzen der Reaktion zwischen Isocyanat und Wasser). Die Abbindezeit oder Fadenziehzeit $t_A$ definiert den Zeitpunkt, wenn ein in das aufsteigende Gemisch eingetauchtes Streichholz beim Herausziehen Fäden zieht. Die Steigzeit ts ist erreicht, wenn die Expansion des Schaums endgültig beendet ist. Hierbei ist zu beachten, dass einige Systeme dazu neigen, ein Stück abzusacken und dann noch einmal weiter steigen, so dass die Steigzeit erst nach dem erneuten Ansteigen endgültig beendet ist. Als "Nachdrücken" wird das Verhältnis von Steigzeit zu Fadenziehzeit bezeichnet. Die folgende Tabelle 2 fasst die Reaktionskinetik zusammen.

**Tabelle 2**

| Erfindungsgemäß | | | Vergleichsbeispiele | | | | | | | | | |
|---|---|---|---|---|---|---|---|---|---|---|---|---|
| | | | | | | | | | | | | |
| | E2 | E1 | V5 | V9 | V6 | V2 | V1 | V4 | V10 | V8 | V7 | V0 | V3 |
| $t_L$ [s] | 9 | 6 | 10 | 6 | 5 | 7 | 5 | 6 | 6 | 6 | 5 | 5 | 8 |
| $t_A$ [s] | 55 | 70 | 45 | 70 | 65 | 75 | 60 | 107 | 57 | 67 | 55 | 45 | 65 |
| $t_S$ [s] | 77 | 110 | 55 | 110 | 105 | 125 | 105 | 190 | 106 | 126 | 105 | 90 | |
| | | | sackt ab | | | | | | | | | | Kollabiert |
| tS/tL | 9 | 18 | 6 | 18 | 21 | 18 | 21 | 32 | 18 | 21 | 21 | 18 | |
| tS/tA | 1,4 | 1,6 | 1,2 | 1,6 | 1,6 | 1,7 | 1,8 | 1,8 | 1,9 | 1,9 | 1,9 | 2,0 | |

Die Vergleichsbeispiele sind in Tabelle 2 anhand Wertes für das Verhältnis von Steigzeit zu Fadenziehzeit (Nachdrücken) in aufsteigender Reihenfolge geordnet. Der Polyurethan-Schaum aus Vergleichsbeispiel V0 enthielt kein Flammschutzmittel und derjenige aus Vergleichsbeispiel V7 enthielt das im Markt erprobte halogenhaltige Flammschutzmittel Trischloroprolphosphat. Diese beiden Beispiele können als Referenz für die übliche Größenordnung für das Nachdrücken dienen, das normalerweise in einem Bereich von 1,8 bis 2,1 liegt, bzw. in einem Verhältnis $t_S/t_A \leq 2$, bevorzugt $\leq 5:3$. Die Zusammensetzung aus Vergleichsbeispiel V5 weist zwar einen besonders günstigen Wert für das Nachdrücken ab, die Zusammensetzung bildet jedoch keinen stabilen Schaum aus, vielmehr sackt ein bereits aufgeschäumter Teil der Zusammensetzung dauerhaft ab.

Alle erfindungsgemäßen Polyurethan-Weichschäume weisen sowohl bei den kinetischen Kennwerten vergleichbare oder günstigere Werte auf, als diejenigen der Vergleichsbeispiele, insbesondere als diejenigen aus Vergleichsbeispielen V0 und V7. Die erfindungsgemäßen Polyurethan-Weichschäume wiesen eine längere Liegezeit und eine kürze Steigzeit auf als die diejenigen aus Vergleichsbeispielen V0 und V7. Die Gegenüberstellung der Steigzeiten der PUR-Weichschäume zeigt, dass diejenigen der Vergleichsbeispiele V4, V8 und V10 Steigzeiten über zwei Minuten aufwiesen, also eine Verzögerung um mehr als ein Drittel gegenüber dem Nullwert. Dies ist ungünstig. Die Verlängerung der Steigzeit auf über drei Minuten (V4) ist für industrielle Herstellungsprozesse nicht mehr akzeptabel.

Die Vorteile der Verwendung von Phosphinaten als Flammschutzmittel bei der Herstellung von PUR-Weichschäumen zeigt sich besonders deutlich beim Vergleich des Nachdrückverhaltens. Neben den erfindungsgemäßen Polyurethan-Weichschäumen lag das Verhältnis $t_S/t_A$- nur bei den Polyurethan-Schäumen aus Vergleichsbeispiel V5, der instabil war, aus V9 und aus V6 unter dem bevorzugten Wert von 5:3. Es wird später gezeigt, dass die Polyurethan-Schäume aus Vergleichsbeispiel V9 und aus V6 den erfindungsgemäßen Beispielen bei der Geschwindigkeit der Selbstverlöschung unterlegen sind.

Insgesamt zeigen die Beispiele, dass die Verwendung von Verwendung von Phosphinaten als Flammschutzmittel bei der Herstellung von PUR-Weichschäumen zu einer kürzeren oder zumindest vergleichbaren Steigzeit des PUR-Weichschaums und zu einem deutlich verbesserten Nachdrückverhalten führt.

Das erfindungsgemäße Beispiel E1, sowie alle Vergleichsbeispiele enthielten die gleichen Mengen der jeweiligen Komponenten. Es wurde nur die Art des Flammschutzmittels geändert, so dass die oben dargestellten technischen Effekte im Hinblick auf die Reaktionskinetik eindeutig auf die Art des Flammschutzmittels zurückzuführen sind. Diese Eigenschaften sind im Herstellungsverfahren von Bedeutung, weil sie die Herstellungszeiten verkürzen und die Handhabung des Schaums während der Herstellung erleichtern.

**Mechanische Eigenschaften der PUR-Weichschäume**

Ca. 93 Gramm des jeweiligen Reaktionsgemisches wurden in eine 23 °C warme, mit Teflonfolie ausgekleidete Kastenform aus Aluminium mit einem Volumen von 1,6 $dm^3$ gegossen. Die Form wurde für 6 Minuten verschlossen und verriegelt. Die mechanischen Untersuchungen wurden an dem so erhaltenen PUR-Schaum durchgeführt.
Die folgende Tabelle 3 fasst die mechanischen Eigenschaften der PUR-Weichschäume zusammen. Da aus den Zusammensetzungen für die Vergleichsbeispiele V3 und V5 keine Schäume erhalten wurden, werden diese Beispiele nicht in Tabelle 3 gezeigt. Wünschenswert sind eine geringe Rohdichte nach DIN EN ISO 845 (Oktober 2009) und eine niedrige Stauchhärte bei 40% Stauchung ("CV40") nach DIN EN ISO 3386-1 (10/2015).

**Tabelle 3: Mechanische Eigenschaften**

| | Erfindungsgemäß | | Vergleichsbeispiele | | | | |
|---|---|---|---|---|---|---|---|
| | E2 | E1 | V7 | V2 | V6 | V1 | V4 |
| Zellstruktur | fein-mittel | fein | fein | fein | fein | sehr fein | mittel |
| Rohdichte [kg/$m^3$] | 39 | 51 | 45 | 49 | 44 | 49 | 52 |
| CV40 [kPa] | 3,3 | 3,4 | 2,8 | 3,1 | 3,3 | 5,0 | 6,5 |

Die Vergleichsbeispiele sind in Tabelle 2 anhand Wertes für die Stauchhärte in aufsteigender Reihenfolge geordnet. Die Vergleichsbeispiele illustrieren, wie herkömmliche Flammschutzmittel die mechanischen Eigenschaften von Polyurethan-Schäumen beeinflussen. Der Polyurethan-Schaum aus Vergleichsbeispiel V7 enthielt Trischloropropylphosphat (TCPP), das dafür bekannt ist Polyurethan-Schäume weicher zu machen und dieser Schaum wies die niedrigste Stauchhärte auf. Die Polyurethan-Schäume der Vergleichsbeispiele V1 und V4 wiesen eine deutlich erhöhte Stauchhärte im Vergleich zu den anderen Beispielen auf. Diese Schäume enthielten Melamin (V1) oder Ammoniumpolyphosphat (V4)

Die Polyurethanschäume der Vergleichsbeispiele V2, enthaltend roter Phosphor, und V6, enthaltend Triethylphosphat, wiesen vergleichbare Werte für die Stauchhärte und die Rohdichte auf, wie die erfindungsgemäßen Beispiele. Allerdings sind diese Polyurethan-Schäume den erfindungsgemäßen Beispielen bei der Geschwindigkeit der Selbstverlöschung unterlegen.

**Flammschutzeigenschaften der PUR-Weichschäume**

Des Weiteren wurden Brandschutztests an den PUR-Weichschäumen durchgeführt. Der Brandtest ist angelehnt an den britischen Standard BS 5852:1990-Teil 2 mit der Zündquelle 4 ("Crib"), wurde jedoch ohne textile Deckschicht der Oberflächen durchgeführt.

Der Test findet in einer Kammer (70 x 66 x 40 $cm^3$) mit kontrollierter Belüftung statt. Aus PUR-Weichschäumen werden mit einer Bandsäge zwei Probenkörper (A) und (B) mit den Dimensionen 160 x 150 x 80 mm herausgeschnitten. Die Probenkörper werden in der Kammer aufeinander gestellt. Dazu wird der Probenkörper (A) mit einer der Seiten mit den Maßen 1160 x 150 mm auf die Unterlage gelegt. Auf die nun oben liegende Seite des Probenkörpers (A) wird der Probenkörper (B) mit einer der Seiten mit den Maßen 80 x 150 mm senkrecht so gestellt, dass die lange Seite des Probenkörpers (B) eine Linie mit der kurzen Seite des Probenkörpers (A) bildet. Die so aufeinandergestellten Probenkörper bilden einen rechten Winkel und haben die Form eines Sitzes.

Aus 10 Holzstücken von 2 cm Länge und 0,3 cm Durchmesser wird im Winkel zwischen den so aufgestellten Probenkörpern eine Krippe am Winkel zwischen den beiden aufgestellten Probenkörpern, d.h. auf der "Sitzfläche" an der "Lehne", aufgebaut. Die Krippe wird mit 0,5 $cm^3$ Ethanol benetzt und entzündet. Die Kammer wird verschlossen.

Die Zeit von der Entzündung bis zum Verlöschen der Flamme wird gemessen und als Brenndauer dargestellt.

Tabelle 4 fasst die Flammschutzeigenschaften der PUR-Weichschäume zusammen. Ziel ist, eine möglichst kurze Brenndauer zu erreichen. Der Polyurethan-Schaum aus Vergleichsversuch V7 ist hier relevant, weil gezeigt wurde, dass bei richtiger Herstellung und Weiterverarbeitung mit diesem Schaum auch die Anforderungen für öffentliche Gebäude in England erfüllt werden können. Die ist mit Schaumstoff entsprechend Vergleichsbeispiel V0 erfahrungsgemäß nicht möglich.

**Tabelle 4: Flammschutzeigenschaften der PUR-Weichschäume**

| Erfindungsgemäß | | | Vergleichsbeispiele | | | | | | | | |
|---|---|---|---|---|---|---|---|---|---|---|---|
| | E1 | E2 | V2 | V4 | V6 | V7 | V9 | V0 | V1 | V8 | V10 |
| Selbstverlöschung nach ..... Sekunden | 72 | 74 | 76 | 77 | 80 | 81 | 83 | 87 | 87 | 91 | * |
| * der Schaumstoff ist nicht selbst verlöschend und wurde nach 90 Sekunden durch Fluten der Brandkammer mit Stickstoff gelöscht. | | | | | | | | | | | |

Der Polyurethan-Weichschaum aus dem erfindungsgemäßen Beispiel E1 enthaltend Aluminiumdiethyl-Phosphinat als Flammschutzmittel hatte mit nur 72 Sekunden die kürzeste Brenndauer im Vergleich zu allen PUR-Schäumen. Diese deutliche verbesserten Brandschutzeigenschaften des erfindungsgemäßen PUR-Schaums zeigen sich insbesondere auch im Vergleich mit PUR-Weichschäumen in denen Melamin (V1) oder Ammoniummagnesiumphosphat (V10) als Brandschutzmittel eingesetzt wurde und die 15 Sekunden oder sogar noch länger brannten als der erfindungsgemäße PUR-Weichschaum.

Aber auch im Vergleich mit herkömmlichen phosphathaltigen und halogenhaltigen Flammschutzmitteln war die Brenndauer des erfindungsgemäßen PUR-Schaums deutlich verkürzt. Der PUR-Weichschaum mit Ammoniumpolyphosphat (V4) brannte 77 Sekunden und der PUR-Weichschaum mit halogenhaltigem Trischlorpropylphosphat (V7) brannte 81 Sekunden, also fast 10 Sekunden länger als der erfindungsgemäße PUR-Weichschaum. Es war schon gezeigt worden, dass das Flammschutzmittel P4 ungünstig auf die Schäumkinetik wirkt.

Im Brandverhalten zeigen sich die Vorteil des erfindungsgemäßen Flammschutzmittels besonders: kein anderes Flammschutzmittel führte zu so schneller Selbstverlöschung der PUR-Weichschäume. Darüber hinaus führt das erfindungsgemäße Flammschutzmittel bei der Herstellung von Polyurethan-Weichschaumstoffen zu einer vergleichbaren oder teilweise besseren Reaktionskinetik im Vergleich zu herkömmlichen Flammschutzmitteln, wobei gleichzeitig die gewünschten mechanischen Eigenschaften, insbesondere die Stauchhärte durch die Verwendung des erfindungsgemäßen Flammschutzmittels nicht negativ beeinträchtigt werden.

**Patentansprüche**

1. Verfahren zur Herstellung von Polyurethan-Weichschaum, wobei der Polyurethan-Weichschaum erhalten wird oder erhältlich ist durch Umsetzung einer Zusammensetzung enthaltend oder bestehend aus

   - einer Komponente **A1** enthaltend oder bestehend aus Verbindungen die gegenüber Isocyanaten reaktiv sind,

wobei die Komponente **A1** zu mindestens 30 Gew.-%, bezogen auf die Komponente **A1**, aus Verbindungen mit einer OH-Zahl nach DIN 53240-1 (Juni 2013) von 25 bis 57 mg KOH/g besteht;
- einer Komponente **A2** enthaltend Wasser und/oder mindestens ein physikalisches Treibmittel;
- gegebenenfalls einer Komponente **A3** enthaltend Hilfs- und Zusatzstoffe;
- einer Komponente **A4** enthaltend oder bestehend aus mindestens einem Flammschutzmittel;
- einer **Komponente B** enthaltend oder bestehend aus Di- und/oder Polyisocyanaten;

bei einer Kennzahl in einem Bereich von 60 bis 115,
**dadurch gekennzeichnet, dass**
das Komponente **A4** mindestens ein Phosphinat-Salz mit der Formel (I) enthält oder daraus besteht:

$$M^{m+}(R^1R^2PO_2)^-_m \qquad (I)$$

wobei,

M ein Kation ist,
m eine ganze Zahl $\geq$ 1 ist und
$R^1$ und $R^2$ unabhängig voneinander ausgewählt sind aus der Gruppe bestehend aus H, $C_1$-$C_4$ Alkylgruppen und $C_6$-$C_{12}$ Arylgruppen.

**2.** Verfahren nach Anspruch 1, **dadurch gekennzeichnet, dass** im Phosphinat-Salz nach Formel (I) m=1, 2 oder 3 ist.

**3.** Verfahren nach Anspruch 1 oder 2, **dadurch gekennzeichnet, dass** im Phosphinat-Salz nach Formel (I) $R^1$ und $R^2$ $C_1$-$C_4$ Alkylgruppen sind.

**4.** Verfahren nach einem der vorhergehenden Ansprüche, **dadurch gekennzeichnet, dass** das Phosphinat-Salz kein Zerewitinoff-aktives Wasserstoffatom enthält.

**5.** Verfahren nach einem der vorhergehenden Ansprüche, **dadurch gekennzeichnet, dass** das Phosphinat-Salz Natriumdiethylphosphinat, Zink- oder Aluminiumdiethylphosphinat ist.

**6.** Verfahren nach einem der vorhergehenden Ansprüche, **dadurch gekennzeichnet, dass** der Anteil des Phosphinat-Salzes in Komponente **A4** mindestens 60 Gew.-%, insbesondere mindestens 80 Gew.-%, jeweils bezogen auf das Gewicht der Komponente **A4,** beträgt.

**7.** Verfahren nach einem der vorhergehenden Ansprüche, **dadurch gekennzeichnet, dass** der Anteil des Phosphinat-Salzes in der Zusammensetzung 0,1 bis 10 Gew.-%, insbesondere 1 bis 6 Gew.-%, jeweils bezogen auf die Zusammensetzung, beträgt.

**8.** Verfahren nach einem der vorhergehenden Ansprüche, **dadurch gekennzeichnet, dass** der Polyurethan-Weichschaum erhalten wird oder erhältlich ist durch Umsetzung einer Zusammensetzung enthaltend oder bestehend aus

- 67 Gew.-% bis 99,68 Gew.-% von Komponente **A1**,
- 0,2 Gew.-% bis 20 Gew.-% von Komponente **A2,**
- 0,02 Gew.-% bis 5 Gew.-% von Komponente **A3,**
- 0,1 Gew.-% bis 8 Gew.-% von Komponente **A4,**

wobei die Gew.-% jeweils bezogen sind auf die Summe Komponenten A1, A2, A3 und A4,
und Komponente B,
bei einer Kennzahl in einem Bereich von 75 bis 95.

**9.** Verfahren nach einem der vorhergehenden Ansprüche, **dadurch gekennzeichnet, dass** das Verfahren ein Formschaumverfahren ist.

**10.** Polyurethan-Weichschaum, erhalten durch oder erhältlich durch ein Verfahren nach einem der Ansprüche 1 bis 9.

**11.** Polyurethan-Weichschaumstoff nach Anspruch 10, **dadurch gekennzeichnet, dass** der Polyurethan-Weichschaumstoff eine Rohdichte nach DIN EN ISO 845 (Oktober 2009) von 10 $kg/m^3$ bis 90 $kg/m^3$, insbesondere von

20 kg/$m^3$ bis 60 kg/$m^3$, hat.

**12.** Polyurethan-Weichschaumstoff nach Anspruch 10 oder 11, **dadurch gekennzeichnet, dass** der Polyurethan-Weichschaumstoff eine Stauchhärte nach DIN EN ISO 3386-1 von Oktober 2015 von 2 kPa bis 20 kPa, insbesondere von 3 kPa bis 7 kPa, hat.

**13.** Polyurethan-Weichschaumstoff nach einem der Ansprüche 10 bis 12, **dadurch gekennzeichnet, dass** der Polyurethan-Weichschaumstoff eine Brenndauer von höchstens 79 Sekunden, insbesondere von höchstens 75 Sekunden, hat, wobei die Brenndauer in Anlehnung an den britischen Standard BS 5852:1990, Teil 2 ermittelt wird, bei dem ein Probenkörper aus dem Polyurethan-Weichschaumstoff ohne textile Deckschicht mit der Zündquelle entflammt wurde.

**14.** Verwendung von Polyurethan-Weichschaumstoff nach einem der Ansprüche 10 bis 13 zur Herstellung von Möbelpolsterungen, Textileinlagen, Matratzen, Automobilsitze, Kopfstützen, Armlehnen, Schwämmen und Bauelementen, sowie Sitz- und Armaturenverkleidungen für Fahrzeuge.

**15.** Verwendung eines Phosphinat Salzes gemäß Formel (I)

$$M^{m+}(R^1R^2PO_2)^-_m \qquad (I)$$

wobei,

M ein Kation ist,
m eine ganze Zahl $\geq$ 1 ist, und
$R^1$ und $R^2$ unabhängig voneinander ausgewählt sind aus der Gruppe bestehend aus H, $C_1$-$C_4$ Alkylgruppen und $C_6$-$C_{12}$ Arylgruppen
als Flammschutzmittel in Polyurethan-Weichschäumen, wobei das Phosphinatsalz bevorzugt Aluminiumdiethylphosphinat oder Natriumdiethylphosphinat ist.

Europäisches Patentamt
European Patent Office
Office européen des brevets

# EUROPÄISCHER RECHERCHENBERICHT

Nummer der Anmeldung
EP 18 18 7907

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WEN-HUI RAO ET AL: "Flame-Retardant Flexible Polyurethane Foams with Highly Efficient Melamine Salt", INDUSTRIAL & ENGINEERING CHEMISTRY RESEARCH, Bd. 56, Nr. 25, 28. Juni 2017 (2017-06-28), Seiten 7112-7119, XP055546074, ISSN: 0888-5885, DOI: 10.1021/acs.iecr.7b01335 | 1,2,4, 6-15 | INV. C08G18/40 C08G18/76 C08K5/00 C08G18/18 C08G101/00 |
| Y | * Seite 7112, Spalte 1 * * scheme 1; Seite 7113, Spalte 1 * * Seite 7118 * | 1-15 | |
| X | Wen-Hui Rao ET AL: "Flame-Retardant Flexible Polyurethane Foams with Highly Efficient Melamine Salt (Supportive information S1)", Industrial & Engineering Chemistry Research, 28. Juni 2017 (2017-06-28), Seiten 7112-7119, XP055546158, DOI: 10.1021/acs.iecr.7b01335 Gefunden im Internet: URL:https://pubs.acs.org/doi/suppl/10.1021/acs.iecr.7b01335/suppl_file/ie7b01335_si_001.pdf [gefunden am 2019-01-22] | 1,2,4, 6-8, 10-15 | |
| Y | * Tabellen S1, S4, S5 * | 3,5 | |
| Y | US 2015/105484 A1 (SUN XIUDONG [US] ET AL) 16. April 2015 (2015-04-16) * Absätze [0006], [0007], [0056]; Ansprüche 5, 11; Beispiele 12-16 * | 3,5 | |
| Y | CN 105 330 818 B (SUZHOU INST ADVANCED STUDY USTC) 4. Mai 2018 (2018-05-04) * Absätze [0001], [0006], [0020] - [0028]; Ansprüche; Beispiele * | 1-15 | |

RECHERCHIERTE SACHGEBIETE (IPC)
C08G
C08K

Der vorliegende Recherchenbericht wurde für alle Patentansprüche erstellt

4

| Recherchenort | Abschlußdatum der Recherche | Prüfer |
|---|---|---|
| München | 24. Januar 2019 | Eigner, Markus |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 18 18 7907

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

24-01-2019

| Im Recherchenbericht angeführtes Patentdokument | Datum der Veröffentlichung | Mitglied(er) der Patentfamilie | Datum der Veröffentlichung |
|---|---|---|---|
| US 2015105484 A1 | 16-04-2015 | CN 105814140 A | 27-07-2016 |
| | | EP 3058031 A1 | 24-08-2016 |
| | | JP 2016535126 A | 10-11-2016 |
| | | KR 20160071433 A | 21-06-2016 |
| | | TW 201520271 A | 01-06-2015 |
| | | US 2015105484 A1 | 16-04-2015 |
| | | WO 2015057717 A1 | 23-04-2015 |
| CN 105330818 B | 04-05-2018 | KEINE | |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2011092232 A
- DE 102004035508 A1
- WO 2005118604 A
- EP 2910585 A
- EP 1359177 A
- WO 2010043624 A
- EP 1923417 A
- US 4089835 A
- US 4260530 A
- GB 2072204 A
- DE 3103757 A1
- US 4374209 A
- EP 0007502 A
- EP 0000389 A
- EP 0176013 A


### In der Beschreibung aufgeführte Nicht-Patentliteratur


- Polyurethane. **G.W. BECKER ; D. BRAUN.** Kunststoff Handbuch. Carl Hanser Verlag, 1993, 193 f, , 220 f
- Polyurethane. **G.W. BECKER ; D. BRAUN.** Kunststoff Handbuch. Carl Hanser Verlag, 1993, 118 f
- I.C.G. Garcia: Recent Advances on the Utilization of Nanoclays and Organophosphorus Compounds in Polyurethane Foams for Increasing Flame Retardancy. **J.C. QUAGLIANO ; V.M. WITTEMBERG.** Structural Nanocomposites, Engineering Materials. Springer Verlag, 2013, vol. 1, 249-258
- **L. CHEN ; Y.-Z. WANG.** A review on flame retardant technology in China. Part 1: development of flame retardants. *Polym. Adv. Technol.,* 2010, vol. 21, 1-26
- **S.V. LEVCHIK.** Non-Halogenated Flame Retardant Handbook. Scrivener Publishing LLC, 2014, 17-74
- **A. LORENZETTI et al.** *Polymer Degradation and Stability,* 2011, vol. 96, 1455-1461
- Kunststoff-Handbuch. Carl-Hanser-Verlag, 1993, vol. VII, 139-265
- Kunststoff-Handbuch. Carl-Hanser-Verlag, 1993, vol. VII, 104-127
- **W. SIEFKEN.** *Justus Liebigs Annalen der Chemie,* vol. 562, 75-136
- Polyurethane. **G.W. BECKER ; D. BRAUN.** Kunststoff Handbuch. Carl Hanser Verlag, 1993, 532